(19) Europäisches Patentamt
European Patent Office
Office européen des brevets

(11) **EP 3 070 120 B1**

(12) **EUROPEAN PATENT SPECIFICATION**

(45) Date of publication and mention of the grant of the patent:
**08.05.2019 Bulletin 2019/19**

(51) Int Cl.:
***C08L 9/00*** ^(2006.01) ***B60C 1/00*** ^(2006.01)

(21) Application number: **16160487.1**

(22) Date of filing: **15.03.2016**

(54) **POLYMER COMPOSITE AND METHOD FOR PRODUCING THE SAME, AND RUBBER COMPOSITION FOR TIRES AND PNEUMATIC TIRE**

POLYMERVERBUNDWERKSTOFF UND VERFAHREN ZUR HERSTELLUNG DAVON SOWIE KAUTSCHUKZUSAMMENSETZUNG FÜR REIFEN UND LUFTREIFEN

COMPOSITE POLYMÈRE ET SON PROCÉDÉ DE PRODUCTION, COMPOSITION DE CAOUTCHOUC POUR PNEUS ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2015 JP 2015058212**

(43) Date of publication of application:
**21.09.2016 Bulletin 2016/38**

(73) Proprietor: **SUMITOMO RUBBER INDUSTRIES, LTD.**
**Kobe-shi, Hyogo-ken, 651-0072 (JP)**

(72) Inventors:
- **WASHIZU, Kensuke**
  **Kobe-shi,, Hyogo 651-0072 (JP)**
- **NAGASE, Takayuki**
  **Kobe-shi,, Hyogo 651-0072 (JP)**

(74) Representative: **Manitz Finsterwald Patent- und Rechtsanwaltspartnerschaft mbB**
**Martin-Greif-Strasse 1**
**80336 München (DE)**

(56) References cited:
**EP-A1- 2 774 770** **US-A1- 2009 186 965**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

EP 3 070 120 B1

## Description

### TECHNICAL FIELD

The present invention relates to a pneumatic tire having a tread, which is composed of a rubber composition including a polymer composite.

### BACKGROUND ART

It is desired for treads for tires, and especially for high performance tires to maintain excellent handling stability (grip performance) on dry roads from the start to the end of running. In other words, it is desired for them to well maintain both excellent initial grip performance and stable grip performance during running (hereinafter, also referred to as "grip performance stability").

Studies have been conducted on methods for improving grip performance by adding a resin having a specific softening point to a rubber composition for treads (see, for example, Patent Literature 1). For example, in order to improve initial grip performance, methods have been studied that increase the amount of a low softening point resin, a liquid polymer, or the like, or that add a low-temperature softener. Also, in order to obtain grip performance stability, methods have been studied that add a high softening point resin to a rubber composition for treads.

However, although tires with treads containing low softening point resins exhibit improved initial grip performance, they unfortunately exhibit lower grip performance stability as the tread temperature increases.

On the other hand, tires with treads containing high softening point resins have grip performance stability, but unfortunately exhibit greatly reduced initial grip performance.

A possible method to solve the above problems is to add a combination of a low softening point resin and a high softening point resin to a rubber composition. However, since the total amount of resin contained in a rubber composition greatly affects the temperature properties of the entire rubber, the total resin amount that can be added to the rubber composition is limited. Consequently, the initial grip performance and grip performance stability of the rubber composition containing a low softening point resin and a high softening point resin are not as good as those of rubber compositions containing either resin alone. Moreover, grip performance is in a trade-off relationship with abrasion resistance. Therefore, a need exists to develop technologies which can highly improve initial grip performance and grip performance stability at the same time, while ensuring good abrasion resistance. Meanwhile, rubber compositions containing a liquid rubber or resin also have a problem in that the rubber compound closely adheres to the rotor during kneading or to the metal part of the roll, thereby deteriorating processability. Thus, processability is also in a trade-off relationship with grip performance.

EP 2 774 779 A1 discloses a pneumatic tire with an inner liner comprising a styrene-isobutylene-styrene triblock copolymer and a tackifier, such as C9 and C5 petroleum resin having a molecular weight of 700 to 900 g/mol.

US 2011/0048599 relates to a rubber composition for a pneumatic tire tread containing a resin blend and a functionalized elastomer. The rubber composition comprises three kinds of resins, namely a polyester terephthalate resin, a styrene/alpha-metyl styrene resin, gum rosin and/or coumarone indene resin.

US 2010/0317800 A1 discloses a rubber composition for a tire tread, wherein the tread comprises a synthetic diene rubber and an oligomeric resin. The examples disclose a rubber composition including SBR Buna VSL 5025 and 4 phr of resin, wherein the resin has an average molecular weight of more than 700 g/mol.

US 2010/0179247 A1 discloses a rubber composition for a tire tread, wherein the rubber composition includes a diene rubber, a reinforcing filler and a petroleum hydrocarbon resin having a number-average molecular weight of 750 to 1000 g/mol.

### CITATION LIST

### PATENT LITERATURE

Patent Literature 1: JP 2004-137463 A

### SUMMARY OF INVENTION

### TECHNICAL PROBLEM

The present invention aims to solve the above problems and provide a polymer composite that can impart good processability to a rubber composition for the tread of a pneumatic tire and, further, can achieve balanced improvements in initial grip performance, grip performance stability, and abrasion resistance; and a method for producing the polymer

composite.

SOLUTION TO PROBLEM

The present invention relates to a pneumatic tire having a tread, wherein the tread is composed of a rubber composition including a polymer composite, obtained by mixing a resinous organic compound having a weight average molecular weight of 250 or more, a high molecular weight polymer and a low molecular weight polymer, the polymer being synthesized by polymerizing a conjugated diene monomer that is a conjugated diene-containing monomer, wherein the high molecular weight polymer has a weight average molecular weight of at least 50,000 and the low molecular weight polymer has a weight average molecular weight of 3,000 or more and less than 50,000.

Preferably, the conjugated diene monomer is at least one selected from the group consisting of butadiene, isoprene, and derivatives of butadiene or isoprene.

The polymer is preferably synthesized by polymerizing the conjugated diene monomer and an aromatic vinyl monomer.

The aromatic vinyl monomer is preferably at least one selected from the group consisting of styrene and derivatives of styrene.

The resinous organic compound is preferably at least one selected from the group consisting of terpenic resins, aromatic resins, acrylic resins, and urethanic resins.

The polymer composite is preferably obtained by mixing the polymer and the resinous organic compound in solid state or in solution.

Preferably, at least one of the polymer or the resinous organic compound is hydrogenated.

The present invention also relates to a method for producing a pneumatic tire having a tread, which is composed of a rubber composition including a polymer composite, the method including mixing the polymer and the resinous organic compound in solid state or in solution.

ADVANTAGEOUS EFFECTS OF INVENTION

The present invention provides a polymer composite for the tread of a pneumatic tire obtained by mixing a resinous organic compound having a weight average molecular weight of 250 or more and a polymer having a weight average molecular weight of 3,000 or more, the polymer being synthesized by polymerizing a conjugated diene monomer that is a conjugated diene-containing monomer. Such a polymer composite can impart good processability to a rubber composition of a tread and, further, can achieve balanced improvements in initial grip performance, grip performance stability, and abrasion resistance. Thus, the pneumatic tire with a tread formed from the polymer composite can achieve balanced improvements in initial grip performance, grip performance stability, and abrasion resistance.

DESCRIPTION OF EMBODIMENTS

<<Polymer composite>>

The polymer composite (polymer/resinous organic compound composite) of the pneumatic tire of the present invention is obtained by mixing a resinous organic compound (hereinafter, also referred to simply as resin) having a weight average molecular weight of 250 or more and a polymer having a weight average molecular weight of 3,000 or more, synthesized by polymerizing a conjugated diene monomer that is a conjugated diene-containing monomer.

When before the kneading of a rubber composition, the polymer composite is preliminarily prepared and then is added to the rubber composition and kneaded together, the rubber compound does not closely adhere to the rotor during kneading or to the metal part of the roll, and therefore processability is not deteriorated. Moreover, the rubber composition containing the polymer composite can achieve balanced improvements in initial grip performance, grip performance stability, and abrasion resistance as compared to conventional rubber compositions prepared by directly adding a resin, such as, for example, by the method of using both a low softening point resin and a high softening point resin, or the method of adding a terpenic resin or aromatic resin which can mix well with rubber. This is presumably because the preliminary preparation of the polymer composite improves the compatibility between the rubber and the resin, thereby greatly enhancing the dispersibility of the resin so that the effect of the resin added can be markedly achieved. The details are probably as follows.

Processability is improved by the polymer composite presumably according to the following mechanism: a resin which may deteriorate processability is preliminarily mixed uniformly into a polymer, so that the resin is less likely to be brought into contact with the mixer or the metal part of the roll, whereby the adhesion problem is ameliorated. Also, grip performance and abrasion resistance are improved presumably according to the following mechanism: as a result of the uniform mixing of the polymer and the resin, the rubber compound exerts its inherent strength and adhesion, thereby

improving the balance between grip performance and abrasion resistance.

(Polymer)

The polymer is firstly described. The polymer is synthesized by polymerizing a conjugated diene monomer that is a conjugated diene-containing monomer, and it has a weight average molecular weight of 3,000 or more.

The conjugated diene monomer that is a conjugated diene-containing monomer may be any conjugated diene-containing monomer. Examples of the monomer include 1,3-butadiene, isoprene, and derivatives thereof which are compounds each having two conjugated carbon-carbon double bonds and at least one non-conjugated carbon-carbon double bond.

Preferable examples of the compound having two conjugated carbon-carbon double bonds and at least one non-conjugated carbon-carbon double bond include compounds represented by the following Formula (1):

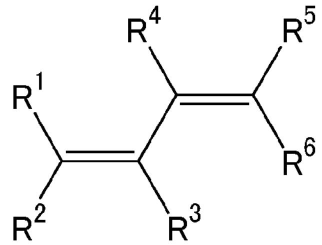

(1)

wherein $R^1$ to $R^6$ independently represent a hydrogen atom, a hydrocarbyl group, or a group represented by the following Formula (1-A), and at least one of $R^1$ to $R^6$ is a group represented by the following Formula (1-A),

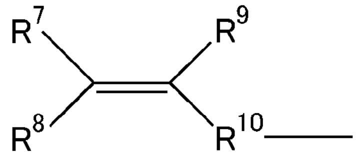

(1-A)

wherein $R^7$ to $R^9$ independently represent a hydrogen atom, a hydrocarbyl group, or a group represented by the following Formula (1-B); and $R^{10}$ represents an alkylene group,

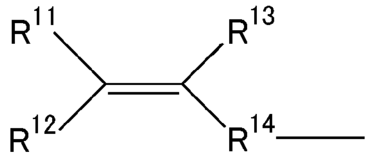

(1-B)

wherein $R^{11}$ to $R^{13}$ independently represent a hydrogen atom or a hydrocarbyl group; and $R^{14}$ represents an alkylene group.

Examples of the hydrocarbyl group as any of $R^1$ to $R^6$ in Formula (1), the hydrocarbyl group as any of $R^7$ to $R^9$ in Formula (1-A), or the hydrocarbyl group as any of $R^{11}$ to $R^{13}$ in Formula (1-B) include alkyl groups and aryl groups. Examples of alkyl groups include a methyl group, an ethyl group, an n-propyl group, an isopropyl group, an n-butyl group, a sec-butyl group, and a tert-butyl group. The alkyl group is preferably a C1-C4 alkyl group, more preferably a C1-C2 alkyl group. Examples of aryl groups include a phenyl group, a methylphenyl group, and an ethylphenyl group.

The hydrocarbyl group as any of $R^1$ to $R^6$ in Formula (1), the hydrocarbyl group as any of $R^7$ to $R^9$ in Formula (1-A), or the hydrocarbyl group as any of $R^{11}$ to $R^{13}$ in Formula (1-B) is preferably an alkyl group.

Regarding $R^1$ to $R^6$ in Formula (1), preferably one of $R^1$ to $R^6$ is a group represented by Formula (1-A) and the other five of $R^1$ to $R^6$ are each an alkyl group or a hydrogen atom, more preferably one of $R^1$ to $R^6$ is a group represented by Formula (1-A) and the other five of $R^1$ to $R^6$ are each a hydrogen atom. Preferably $R^3$ or $R^4$, among $R^1$ to $R^6$, is a group represented by Formula (1-A).

$R^7$ to $R^9$ in Formula (1-A) are preferably each an alkyl group, a hydrogen atom, or a group represented by Formula (1-B) . More preferably, $R^7$ and $R^8$ are alkyl groups and $R^9$ is a hydrogen atom, or one of $R^7$ and $R^8$ is a group represented by Formula (1-B) and the other is an alkyl group, and $R^9$ is a hydrogen atom.

Examples of the alkylene group as $R^{10}$ in Formula (1-A) include a methylene group, an ethylene group, a propylene group, and a butylene group. The alkylene group is preferably a C1-C4 alkylene group, more preferably a

C1-C2 alkylene group, still more preferably a C2 alkylene group.

$R^{11}$ to $R^{13}$ in Formula (1-B) are preferably each an alkyl group or a hydrogen atom. More preferably, $R^{11}$ and $R^{12}$ are alkyl groups and $R^{13}$ is a hydrogen atom.

Examples of the alkylene group as $R^{14}$ in Formula (1-B) include a methylene group, an ethylene group, a propylene group, and a butylene group. The alkylene group is preferably a C1-C4 alkylene group, more preferably a C1-C2 alkylene group, still more preferably a C2 alkylene group.

Examples of the compound represented by Formula (1) include myrcene, farnesene, 3-methylene-1,5-hexadiene, 3-methylene-1,5-heptadiene, 6-methyl-3-methylene-1,5-heptadiene, 5-methyl-3-methylene-1,5-hexadiene, 5-methyl-3-methylene-1,5-heptadiene, 5,6-dimethyl-3-methylene-1,5-heptadiene, 2-methyl-3-methylene-1,5-hexadiene, 2-methyl-3-methylene-1,5-heptadiene, 2,6-dimethyl-3-methylene-1,5-heptadiene, 2,5-dimethyl-3-methylene-1,5-hexadiene, 2,5-dimethyl-3-methylene-1,5-heptadiene, 2,5,6-trimethyl-3-methylene-1,5-heptadiene, 3-methylene-1,6-heptadiene, 3-methylene-1,6-octadiene, 7-methyl-3-methylene-1,6-octadiene, 6-methyl-3-methylene-1,6-heptadiene, 6-methyl-3-methylene-1,6-octadiene, 6,7-dimethyl-3-methylene-1,6-octadiene, 2-methyl-3-methylene-1,6-heptadiene, 2-methyl-3-methylene-1,6-octadiene, 2,7-dimethyl-3-methylene-1,6-octadiene, 2,6-dimethyl-3-methylene-1,6-heptadiene, 2,6-dimethyl-3-methylene-1,6-octadiene, 2,6,7-trimethyl-3-methylene-1,6-octadiene, 3-methylene-1,7-octadiene, 3-methylene-1,7-nonadiene, 8-methyl-3-methylene-1,7-nonadiene, 7-methyl-3-methylene-1,7-octadiene, 7-methyl-3-methylene-1,7-nonadiene, 7,8-dimethyl-3-methylene-1,7-nonadiene, 2-methyl-3-methylene-1,7-octadiene, 2-methyl-3-methylene-1,7-nonadiene, 2,8-dimethyl-3-methylene-1,7-nonadiene, 2,7-dimethyl-3-methylene-1,7-octadiene, 2,7-dimethyl-3-methylene-1,7-nonadiene, 2,7,8-trimethyl-3-methylene-1,7-nonadiene, 3-methylene-1,5-hexadiene, 3-methylene-1,5-heptadiene, 6-methyl-3-methylene-1,5-heptadiene, 5-methyl-3-methylene-1,5-hexadiene, 5-methyl-3-methylene-1,5-heptadiene, 5,6-dimethyl-3-methylene-1,5-heptadiene, 3-methylene-1,6-heptadiene, 3-methylene-1,6-octadiene, 7-methyl-3-methylene-1,6-octadiene, 6-methyl-3-methylene-1,6-heptadiene, 6-methyl-3-methylene-1,6-octadiene, 6,7-dimethyl-3-methylene-1,6-octadiene, 3-methylene-1,7-octadiene, 3-methylene-1,7-nonadiene, 8-methyl-3-methylene-1,7-nonadiene, 7-methyl-3-methylene-1,7-octadiene, 7-methyl-3-methylene-1,7-nonadiene, and 7,8-dimethyl-3-methylene-1,7-nonadiene.

Each of the conjugated diene monomers may be used alone, or two or more kinds thereof may be used in combination. Particularly, in view of more suitably achieving the effects of the present invention, the conjugated diene monomer is preferably at least one selected from the group consisting of 1,3-butadiene, isoprene, and derivatives thereof (compounds each having two conjugated carbon-carbon double bonds and at least one non-conjugated carbon-carbon double bond), more preferably 1,3-butadiene, isoprene, myrcene, or farnesene, still more preferably 1,3-butadiene, myrcene, or farnesene. The conjugated diene monomer is preferably at least one selected from the group consisting of 1,3-butadiene, isoprene, myrcene, farnesene, and derivatives thereof, more preferably 1,3-butadiene, myrcene, or farnesene, still more preferably myrcene or farnesene, particularly preferably farnesene.

As used herein, myrcene refers to a naturally occurring organic compound and is an olefin classified as a monoterpene. Although two kinds of isomers exist for myrcene, i.e., α-myrcene (2-methyl-6-methyleneocta-1,7-diene) and β-myrcene (7-methyl-3-methyleneocta-1,6-diene), in the present invention, simply the term "myrcene" refers to β-myrcene (a compound having the following structure).

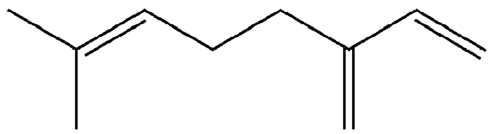

Farnesene is an isoprenoid compound chemically synthesized by oligomerization of isoprene or dehydration of nerolidol, and is mostly used as a flavoring agent or a raw material thereof. All isomers of farnesene, such as α-farnesene ((3E,7E)-3,7,11-trimethyl-1,3,6,10-dodecatetraen) and (E)-β-farnesene ((6E)-7,11-dimethyl-3-methylene-1,6,10-dodecatrien) may be used in the present invention, and (E)-β-farnesene is preferred. In the present invention, simply the term "farnesene" refers to (E)-β-farnesene (a compound having the following structure) .

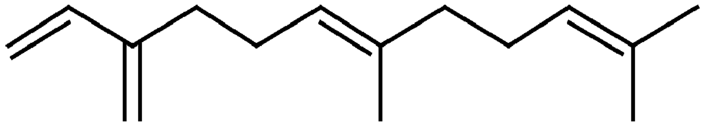

In the polymer, the conjugated diene monomer unit content based on 100% by mass of the structural units constituting the polymer is preferably 5% by mass or more, more preferably 30% by mass or more, still more preferably

40% by mass or more, particularly preferably 55% by mass or more, while it is preferably 95% by mass or less, more preferably 90% by mass or less, still more preferably 80% by mass or less, particularly preferably 70% by mass or less, most preferably 65% by mass or less. If it is less than 5% by mass, abrasion resistance may be reduced. If it is more than 95% by mass, grip performance may be reduced.

The polymer may contain, as structural units, other monomer units based on monomers other than the conjugated diene monomer. Preferably, the polymer contains a monomer unit based on an aromatic vinyl monomer as a structural unit. Thus, the polymer is preferably synthesized by polymerizing the conjugated diene monomer and an aromatic vinyl monomer. Grip performance can be markedly improved by the use of the polymer containing a monomer unit based on an aromatic vinyl monomer (preferably styrene) in addition to the above structural unit.

Examples of the aromatic vinyl monomer include styrene, α-methylstyrene, vinyltoluene, vinylnaphthalene, divinylbenzene, trivinylbenzene, divinylnaphthalene, vinylanthracene, N,N-dimethyl-4-aminoethylstyrene, vinylpyridine, monochlorostyrene, and dichlorostyrene. Among these, the aromatic vinyl monomer is preferably at least one selected from the group consisting of styrene and derivatives of styrene, more preferably styrene.

Examples of the derivatives of styrene include later-described alkylstyrenes, alkoxystyrenes, and unsaturated hydrocarbon group-containing styrenes, with α-methylstyrene being preferred.

In the polymer, the aromatic vinyl monomer unit content based on 100% by mass of the structural units constituting the polymer is preferably 5% by mass or more, more preferably 10% by mass or more, still more preferably 20% by mass or more, particularly preferably 30% by mass or more, most preferably 40% by mass or more, while it is preferably 95% by mass or less, more preferably 70% by mass or less, still more preferably 60% by mass or less, particularly preferably 55% by mass or less. If it is less than 5% by mass, grip performance may be reduced. If it is more than 95% by mass, abrasion resistance may be reduced.

In view of more suitably achieving the effects of the present invention, the combined content of the conjugated diene monomer unit and the aromatic vinyl monomer unit in the polymer is preferably 60% by mass or more, more preferably 80% by mass or more, still more preferably 90% by mass or more, based on 100% by mass of the structural units constituting the polymer. The combined content may be 100% by mass.

The content of a monomer unit such as the conjugated diene monomer unit or the aromatic vinyl monomer unit in the polymer can be measured using an NMR spectrometer (available from Bruker).

The polymerization can be carried out by usual techniques, for example, anionic polymerization, cationic polymerization, radical polymerization, emulsion polymerization, coordination polymerization, ring-opening polymerization, polycondensation, or the like.

The polymerization method is not particularly limited and may be any conventionally known method, such as solution polymerization, emulsion polymerization, vapor phase polymerization, or bulk polymerization. Moreover, the polymerization may be carried out in a batch or continuous mode.

The prepared polymer may further be subjected to a polymer reaction. Examples of the polymer reaction include esterification reaction, etherification reaction, transesterification reaction, amidation reaction, methylolation reaction, epoxidation reaction, hydrolysis reaction, hydroformylation reaction, addition reaction, hydrogenation reaction, sulfonation reaction, nitration reaction, chloromethylation reaction, alkylation reaction, acylation reaction, Diels-Alder reaction, and Friedel-Crafts reaction.

The weight average molecular weight (Mw) of the polymer can be controlled by adjusting the amount of monomer or polymerization initiator to be charged in the polymerization. For example, a larger ratio of total monomer to anionic polymerization initiator or a larger ratio of total monomer to coordination polymerization initiator leads to a higher Mw, while a smaller ratio thereof leads to a lower Mw. The same is true of the number average molecular weight (Mn). Moreover, a person skilled in the art can also control the molecular weight in the polymer reaction.

The polymer has a weight average molecular weight (Mw) of 3,000 or more. If the Mw is less than 3,000, the effects of the present invention cannot be sufficiently achieved.

Particularly, in view of more suitably achieving the effects of the present invention, the polymer is a combination of a high molecular weight polymer and a low molecular weight polymer.

The low molecular weight polymer has a weight average molecular weight (Mw) of 3,000 or more, preferably 3,500 or more, more preferably 4,000 or more. The Mw is less than 50,000, and is more preferably 30,000 or less, still more preferably 20,000 or less, particularly preferably 10,000 or less. A low molecular weight polymer having a Mw of 50,000 or more may not sufficiently serve as a softener.

The high molecular weight polymer has a weight average molecular weight (Mw) of 50,000 or more, more preferably 100,000 or more, still more preferably 150,000 or more. The Mw is preferably 3,000,000 or less, more preferably 2,000,000 or less, still more preferably 1,500,000 or less. The use of a high molecular weight polymer having a Mw of more than 3,000,000 may cause a processing problem such as the need of mastication that involves cleavage of the molecules of the high molecular weight polymer.

The polymer preferably has a ratio of the Mw to the number average molecular weight (Mn), i.e. a molecular weight distribution (Mw/Mn), of 5.0 or less, more preferably 3.0 or less. If it is more than 5.0, abrasion resistance may

be deteriorated. The lower limit of the molecular weight distribution is not particularly limited.

The Mw and Mn of the polymer herein can be determined by gel permeation chromatography (GPC) (GPC-8000 series available from Tosoh Corporation, detector: differential refractometer, column: TSKGEL SUPERMULTIPORE HZ-M available from Tosoh Corporation), calibrated with polystyrene standards.

The polymer may be hydrogenated. In view of more suitably achieving the effects of the present invention, the low molecular weight polymer is preferably hydrogenated. The hydrogenation may be carried out by a known method. Suitable examples of the method include contact hydrogenation in the presence of a metal catalyst, and a method using hydrazine (for example JP S59-161415 A, which is hereby incorporated by reference in its entirety). Contact hydrogenation in the presence of a metal catalyst can be carried out, for example, by adding hydrogen under pressure in an organic solvent in the presence of a metal catalyst. Suitable examples of the organic solvent include tetrahydrofuran, methanol, and ethanol. Each of these organic solvents may be used alone, or two or more kinds thereof may be used in admixture. Moreover, suitable examples of the metal catalyst include palladium, platinum, rhodium, ruthenium, and nickel. Each of these metal catalysts may be used alone, or two or more kinds thereof may be used in admixture . The pressure to be applied is preferably 1 to 300 kgf/cm$^2$, for example.

When the polymer, especially the low molecular weight polymer, is hydrogenated, the rate of hydrogenation of double bonds is preferably 20 to 100 mol%, and is preferably 50 mol% or more, more preferably 70 mol% or more, still more preferably 80 mol% or more. If the rate of hydrogenation is less than 20 mol%, grip performance, especially dry-grip performance, tends to be insufficient.

Herein, the rate of hydrogenation is calculated by the equation below using the integrals of the double bond peaks determined by 1H-NMR (proton NMR). The rate of hydrogenation herein refers to the rate of hydrogenation of double bonds.

$$(\text{Rate of hydrogenation (\%)}) = ((A-B)/A) \times 100$$

A: the integral of the double bond peaks before hydrogenation
B: the integral of the double bond peaks after hydrogenation

Specific examples of the high molecular weight polymer include diene rubbers such as natural rubber (NR), polyisoprene rubber (IR), polybutadiene rubber (BR), styrene-butadiene rubber (SBR), styrene-isoprene rubber (SIR), styrene-isoprene-butadiene rubber (SIBR), ethylene-propylene-diene rubber (EPDM), chloroprene rubber (CR), acrylonitrile butadiene rubber (NBR), and butyl rubber (IIR). Each of these diene rubbers may be used alone, or two or more kinds thereof may be used in combination. Among these, NR, BR, and SBR are preferred, and SBR is more preferred, because they provide a good balance of grip performance and abrasion resistance.

Non-limiting examples of the SBR include emulsion-polymerized styrene-butadiene rubber (E-SBR), and solution-polymerized styrene-butadiene rubber (S-SBR).

The SBR preferably has a styrene content of 20% by mass or more, more preferably 25% by mass or more. If the SBR has a styrene content of less than 20% by mass, grip performance tends to be insufficient. Also, the SBR preferably has a styrene content of 60% by mass or less, more preferably 45% by mass or less. If the SBR has a styrene content of more than 60% by mass, abrasion resistance tends to be reduced and, further, temperature dependence tends to increase so that performance can be more greatly changed as temperature changes .

Specific examples of the low molecular weight polymer include those obtained by reducing the molecular weight of the diene polymers mentioned above, and also include myrcene-based polymers such as myrcene polymer, myrcene-butadiene copolymer, or myrcene-styrene copolymer; and farnesene-based polymers such as farnesene polymer, farnesene-butadiene copolymer, or farnesene-styrene copolymer. Particularly, in view of more suitably achieving the effects of the present invention, the low molecular weight polymer is preferably one obtained by reducing the molecular weight of SBR, a myrcene-based polymer, or a farnesene-based polymer, more preferably a myrcene-based polymer or a farnesene-based polymer, still more preferably a myrcene-styrene copolymer or a farnesene-styrene copolymer, particularly preferably a farnesene-styrene copolymer.

Regarding the examples of myrcene-based polymers, the myrcene polymer refers to a polymer obtained by polymerizing myrcene as a monomer component; the myrcene-butadiene copolymer refers to a copolymer obtained by polymerizing myrcene and butadiene as monomer components; and the myrcene-styrene copolymer refers to a copolymer obtained by polymerizing myrcene and styrene as monomer components. The examples of farnesene-based polymers are defined as above.

(Resinous organic compound)

The resinous organic compound is described below.

The resinous organic compound having a weight average molecular weight of 250 or more is not particularly limited. In view of grip performance, examples include resins each having, as a typical structural unit, at least one of various chemical structures which can contribute to improved grip performance, i.e., aromatic, terpenic, acrylic, and urethanic resins and the like.

Examples of the resinous organic compound include other resins each having, as a typical structural unit, at least one of various chemical structures which can contributes to improved grip performance, i.e., ethylene-, silicone-, vinyl chloride-, vinyl acetate-, acrylamide-, ether-, pyrrolidone-, rosin-, xylene-, ester-, propylene-, carbonate-, imide-, cellophane-, methacrylic acid-, epoxy-, sulfone-, and C5 or C9 petroleum-based resins. Preferably, the resinous organic compound contains no conjugated diene monomer unit.

Aromatic resins contain an aromatic compound as a main component. Examples of commercially available aromatic resins include YS resin SX100 (styrene resin) available from Yasuhara Chemical Co., Ltd., Koresin (alkylphenol resin (a reaction product of butylphenol and acetylene)) available from BASF, and ESCURON V120 (coumarone-indene resin) available from Nitto Chemical Co., Ltd.

Terpenic resins contain a terpene compound as a main component. Examples of commercially available terpenic resins include YS resin PX1250 (terpene resin), YS Polyster G125 (terpene phenol resin), and YS resin TO125 (aromatic modified terpene resin), all available from Yasuhara Chemical Co., Ltd.

Acrylic resins contain an acrylic compound as a main component. Examples of commercially available acrylic resins include UH 2170 available from Toagosei Co., Ltd.

Urethanic resins contain a urethane compound as a main component. Examples of commercially available urethanic resins include AROMATIC URETHANE ACRYLATE OLIGOMER and ALIPHATIC URETHANE ACYLATE OLIGOMER, both available from Sartomer.

The resinous organic compound has a weight average molecular weight (Mw) of 250 or more, preferably 300 or more, more preferably 350 or more. A resinous organic compound having a Mw of less than 250 may not have resinous properties or may be evaporated during processing, thus failing to serve sufficiently as a tackifier and provide sufficient grip performance. The Mw is preferably 20,000 or less, more preferably 16,000 or less, still more preferably 12,000 or less, particularly preferably 8,000 or less, most preferably 3,000 or less, even most preferably 2,000 or less, further most preferably 1,000 or less. A resinous organic compound having a Mw of more than 20, 000 may not serve sufficiently as a tackifier, failing to provide sufficient grip performance.

Herein, the weight average molecular weight of the resinous organic compound can be determined by gel permeation chromatography (GPC) (GPC-8000 series available from Tosoh Corporation, detector: differential refractometer, column: TSKGEL SUPERMULTIPORE HZ-M available from Tosoh Corporation), calibrated with polystyrene standards.

The resinous organic compound preferably has a glass transition temperature (Tg) (°C/DSC) of -100°C or higher, more preferably 0°C or higher, still more preferably 30°C or higher, particularly preferably 50°C or higher. Also, the Tg is preferably 150°C or lower, more preferably 130°C or lower, still more preferably 125°C or lower. If the Tg is lower than -100°C, though the effect of improving initial grip performance can be achieved, good grip performance stability or abrasion resistance may not be obtained. If the Tg is higher than 150°C, though the effect of improving grip performance stability can be achieved, good initial grip performance or abrasion resistance may not be obtained.

Herein, the glass transition temperature of the resinous organic compound is measured by differential scanning calorimetry (DSC) at a rate of temperature rise of 10°C/min in accordance with JIS K 7121.

In view of more suitably achieving the effects of the present invention, the resinous organic compound is preferably a resinous organic compound with a hydrogenated double bond. The hydrogenation can be carried out as described above for the hydrogenation of the polymer.

When the resinous organic compound is hydrogenated, the rate of hydrogenation of double bonds is preferably 20 to 100 mol%, and is preferably 50 mol% or more, more preferably 70 mol% or more. If the rate of hydrogenation is less than 20 mol%, grip performance, especially dry-grip performance, or durability tends to be insufficient.

In view of more suitably achieving the effects of the present invention, the resinous organic compound is preferably at least one selected from the group consisting of aromatic resins, terpenic resins, acrylic resins, and urethanic resins, and is more preferably an aromatic resin or a terpenic resin.

<Terpenic resin>

The terpenic resin is described below. The properties of the resin other than those described for the resinous organic compound are mainly described.

Herein, the terpenic resin refers to a compound obtained by polymerizing a terpene compound as a main

monomer by a usual method. Specifically, for example, materials are added dropwise in an arbitrary order to an organic solvent such as toluene in the presence of a catalyst such as $BF_3$ and then reacted at a predetermined temperature for a predetermined time, whereby a terpenic resin can be produced.

The terpene compound is a hydrocarbon having a composition represented by $(C_5H_8)_n$ or an oxygen-containing derivative thereof, i.e., a compound having a basic terpene backbone that can be classified as a monoterpene ($C_{10}H_{16}$), a sesquiterpene ($C_{15}H_{24}$), a diterpene ($C_{20}H_{32}$), or the like. The terpene compound is not particularly limited, and is preferably a cyclic unsaturated hydrocarbon, and more preferably a compound containing no hydroxyl group.

Specific examples of the terpene compound include α-pinene, β-pinene, 3-carene (δ-3-carene), dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. In view of achieving balanced improvements in grip performance and durability, preferred among these are α-pinene, β-pinene, 3-carene (δ-3-carene), dipentene, and limonene, and more preferred is α-pinene or limonene. The limonene may include any of d-, l-, and d/l-limonenes.

Each of these terpene compounds may be used alone, or two or more kinds thereof may be used in combination.

The terpenic resin may be a terpene resin obtained by polymerizing a terpene compound alone. In view of more suitably achieving the effects of the present invention, the terpenic resin is preferably a terpene-aromatic resin obtained by copolymerizing a terpene compound and an aromatic compound, or an aromatic-modified terpene resin obtained by modifying a terpene resin with an aromatic compound.

The ratio of the aromatic compound and the terpene compound may be appropriately selected so that the later-described physical properties are obtained.

The aromatic compound may be any compound having an aromatic ring, and examples include phenol compounds such as phenol, alkylphenols, alkoxyphenols, or unsaturated hydrocarbon group-containing phenols; naphthol compounds such as naphthol, alkylnaphthols, alkoxynaphthols, or unsaturated hydrocarbon group-containing naphthols; styrene and its derivatives such as alkylstyrenes, alkoxystyrenes, or unsaturated hydrocarbon group-containing styrenes; and coumarone, and indene. Among these, the aromatic compound is preferably phenol for the terpene-aromatic resin, and is preferably a styrene derivative for the aromatic-modified terpene resin. In other words, the terpene-aromatic resin is preferably a terpene phenol resin, and the aromatic-modified terpene resin is preferably a terpene resin modified with a styrene derivative.

The alkyl or alkoxy group in the above compound preferably has 1 to 20 carbon atoms, more preferably 1 to 12 carbon atoms. Moreover, the unsaturated hydrocarbon group in the above compound preferably has 2 to 20 carbon atoms, more preferably 2 to 12 carbon atoms, still more preferably 2 to 5 carbon atoms.

The aromatic compound may have one substituent or two or more substituents on the aromatic ring. In the case of an aromatic compound having two or more substituents on the aromatic ring, the substituents may be present at any of o-, m- and p-positions. Furthermore, in the case of a styrene derivative having a substituent on the aromatic ring, the substituent may be present at o-, m- or p-position with respect to the styrene-derived vinyl group.

Each of these aromatic compounds may be used alone, or two or more kinds thereof may be used in combination.

Specific examples of the alkylphenol include methylphenol, ethylphenol, butylphenol, t-butylphenol, octylphenol, nonylphenol, decylphenol, and dinonylphenol. These alkylphenols may be substituted at any of o-, m- and p-positions. Preferred among these is t-butylphenol, more preferably p-t-butylphenol.

Specific examples of the alkylnaphthol include compounds obtained by replacing the phenol moiety of the above alkylphenols by naphthol.

Specific examples of the alkylstyrene include compounds obtained by replacing the phenol moiety of the above alkylphenols by styrene.

Specific examples of the alkoxyphenol include compounds obtained by replacing the alkyl group of the above alkylphenols by a corresponding alkoxy group. Similarly, specific examples of the alkoxynaphthol include compounds obtained by replacing the alkyl group of the above alkylnaphthols by a corresponding alkoxy group. Also, specific examples of the alkoxystyrene include compounds obtained by replacing the alkyl group of the above alkylstyrenes by a corresponding alkoxy group.

Examples of the unsaturated hydrocarbon group-containing phenol include compounds containing at least one hydroxyphenyl group per molecule, in which at least one of the hydrogen atoms of the phenyl group is replaced by an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenol include isopropenylphenol and butenylphenol. The unsaturated hydrocarbon group-containing naphthol and the unsaturated hydrocarbon group-containing styrene are as described above.

Regarding the terpene-aromatic resin, examples of compounds obtained by copolymerizing a styrene derivative and limonene include compounds represented by the following Formula (I) :

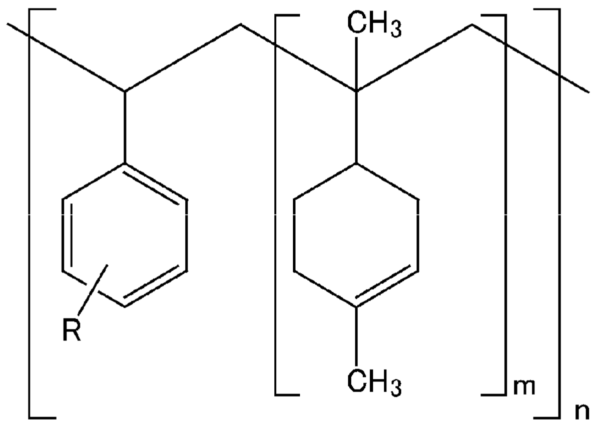

(I)

wherein R represents a substituent on the aromatic ring and is a C1-C20, preferably C1-C12, alkyl group, a C1-C20, preferably C1-C12, alkoxy group, or a C2-C20, preferably C2-C12, unsaturated hydrocarbon group, provided that the number of substituents R may be any of 1 to 5, and when the number of substituents is two or more, the substituents may be the same as or different from one another and may be present at any position; m is 0.2 to 20; and n is 2 to 10.

Specific examples of the terpene resin include YS resin PX1250 and YS resin PX1150. Specific examples of the terpene-aromatic resin include YS Polyster U130 and YS Polyster U115. Specific examples of the aromatic-modified terpene resin include YS resin TO125, YS resin TO115, YS resin TO105, and YS resin TO85. These products are all available from Yasuhara Chemical Co., Ltd.

The terpenic resin may be a hydrogenated terpenic resin obtained by hydrogenating the double bond of the above-described terpenic resin. In view of more suitably achieving the effects of the present invention, the terpenic resin is preferably a hydrogenated terpenic resin. The hydrogenation can be carried out as described above for the hydrogenation of the polymer.

Examples of the hydrogenated terpenic resin include commercial products, such as YS Clearon M80, YS Clearon M105, YS Clearon M115, and YS Clearon M125, all available from Yasuhara Chemical Co., Ltd.

The rate of hydrogenation of double bonds in the hydrogenated terpenic resin is preferably 20 to 100 mol%, and is preferably 50 mol% or more, more preferably 70 mol% or more. If the rate of hydrogenation is less than 20 mol%, grip performance, especially dry-grip performance, or durability tends to be insufficient.

The terpenic resin preferably has a hydroxyl value (i.e. phenol group content) of 400 mg KOH/g or less, more preferably 45 mg KOH/g or less, still more preferably 10 mg KOH/g or less, particularly preferably 5 mg KOH/g or less, most preferably 1 mg KOH/g or less, even most preferably 0.1 mg KOH/g or less. Especially preferably, the hydroxyl value is 0 mg KOH/g. A terpenic resin having a hydroxyl value of more than 400 mg KOH/g may have higher self-aggregation properties and a lower affinity with rubber or filler, thereby failing to provide sufficient grip performance.

Herein, the hydroxyl value of the resinous organic compound refers to the amount in milligram of potassium hydroxide required to neutralize the acetic acid bonded to hydroxyl groups when 1 g of the resin is acetylated, and is measured by potentiometric titration (JIS K 0070:1992).

The terpenic resin preferably has a softening point of 80°C or higher, more preferably 90°C or higher, still more preferably 100°C or higher, further preferably 114°C or higher, particularly preferably 116°C or higher, most preferably 120°C or higher. The softening point is also preferably 180°C or lower, more preferably 170°C or lower, still more preferably 165°C or lower, particularly preferably 160°C or lower, most preferably 135°C or lower. A terpenic resin having a softening point of lower than 80°C tends to be dispersed well in rubber but provide reduced grip performance, while a terpenic resin having a softening point of higher than 180°C is difficult to disperse, with the result that rubber hardness is increased so that grip performance tends to be reduced due to the decrease in effective contact area, i.e. conformity to the road surface, or that good durability tends not to be obtained.

Herein, the softening point of the resinous organic compound is determined as set forth in JIS K 6220-1:2001 with a ring and ball softening point measuring apparatus and is defined as the temperature at which the ball drops down.

<Aromatic resin>

The aromatic resin is described below. The properties of the resin other than those described for the resinous organic compound are mainly described.

Herein, the aromatic resin refers to a compound obtained by polymerizing an aromatic compound as a main monomer by a usual method. Aromatic compounds that can be used are as described for the terpenic resin. Particularly, in view of more suitably achieving the effects of the present invention, preferred are phenol compounds such as phenol,

alkylphenols, alkoxyphenols, or unsaturated hydrocarbon group-containing phenols, and more preferred are alkylphenol compounds. In other words, the aromatic resin is preferably an alkylphenol resin.

Non-limiting examples of the alkylphenol resin include alkylphenol-aldehyde condensation resins obtained by reacting alkylphenols and aldehydes such as formaldehyde, acetaldehyde, or furfural in the presence of acid or alkali catalysts; alkylphenol-alkyne condensation resins obtained by reacting alkylphenols and alkynes such as acetylene; and modified alkylphenol resins obtained by modifying the foregoing resins with compounds such as cashew oil, tall oil, linseed oil, various animal or vegetable oils, unsaturated fatty acids, rosin, alkylbenzene resins, aniline, or melamine. Particularly, in view of the effects of the present invention, alkylphenol-alkyne condensation resins are preferred, and alkylphenol-acetylene condensation resins are particularly preferred.

Examples of the alkylphenol of the alkylphenol resin include cresol, xylenol, t-butylphenol, octylphenol, and nonylphenol. Among these, preferred are branched alkyl group-containing phenols such as t-butylphenol, and particularly preferred is t-butylphenol.

Examples of the alkylphenol of the alkylphenol-alkyne condensation resin include cresol, xylenol, t-butylphenol, octylphenol, and nonylphenol. Among these, preferred are branched alkyl group-containing phenols such as t-butylphenol, and more preferred is t-butylphenol, still more preferably p-t-butylphenol.

The alkyne of the alkylphenol-alkyne condensation resin is preferably a C2-C10 alkyne, more preferably a C2-C5 alkyne, particularly preferably acetylene.

Examples of the alkylphenol resin include Koresin available from BASF.

Other suitable examples of the aromatic resin include coumarone-indene resin. Coumarone-indene resin is formed of coumarone and indene as main monomers, and styrene may further be used as an additional monomer. Examples of the resin formed from coumarone, indene, and styrene include ESCURON V120 and ESCURON G90 both available from Nitto Chemical Co., Ltd.

The aromatic resin may be a hydrogenated aromatic resin obtained by hydrogenating the double bond of the above-described aromatic resin. In view of more suitably achieving the effects of the present invention, the aromatic resin is preferably a hydrogenated aromatic resin. The hydrogenation can be carried out as described above for the hydrogenation of the polymer.

The rate of hydrogenation of double bonds in the hydrogenated aromatic resin is preferably 20 to 100 mol%, and is preferably 50 mol% or more, more preferably 70 mol% or more. If the rate of hydrogenation is less than 20 mol%, grip performance, especially dry-grip performance, or durability tends to be insufficient.

The aromatic resin preferably has a softening point of 80°C or higher, more preferably 100°C or higher, still more preferably 110°C or higher. The softening point is also preferably 180°C or lower, more preferably 150°C or lower, still more preferably 140°C or lower. An aromatic resin having a softening point of lower than 80°C tends to be dispersed well in rubber but provide reduced grip performance, while an aromatic resin having a softening point of higher than 180°C is difficult to disperse, with the result that rubber hardness is increased so that grip performance tends to be reduced due to the decrease in effective contact area, i.e. conformity to the road surface, or that good durability tends not to be obtained.

The aromatic resin preferably has a hydroxyl value (OH value) of 5 mg KOH/g or more, more preferably 15 mg KOH/g or more, still more preferably 150 mg KOH/g or more, particularly preferably 250 mg KOH/g or more. Also, the OH value is preferably 600 mg KOH/g or less, more preferably 400 mg KOH/g or less, still more preferably 350 mg KOH/g or less. If the OH value is less than 5 mg KOH/g, high levels of initial grip and grip performance stability may not be obtained simultaneously. If the OH value is more than 600 mg KOH/g, the resin may be poorly compatible with the rubber component, and therefore sufficient breaking properties may not be obtained and abrasion resistance may be markedly deteriorated.

For the same reason, the hydrogenated aromatic resin preferably has a hydroxyl value (OH value) of 5 mg KOH/g or more, more preferably 10 mg KOH/g or more, still more preferably 12 mg KOH/g or more, but preferably 600 mg KOH/g or less, more preferably 100 mg KOH/g or less, still more preferably 50 mg KOH/g or less.

<Acrylic resin>

The acrylic resin is described below. The properties of the resin other than those described for the resinous organic compound are mainly described.

The acrylic resin is not particularly limited. In view of better achieving the effects of the present invention, the acrylic resin may suitably be a solvent-free acrylic resin.

The solvent-free acrylic resin refers to a (meth) acrylic resin (polymer) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45, all of which are hereby incorporated by reference in their entirety) using no or minimal amounts of auxiliary raw materials such as a polymerization initiator, a chain transfer agent, and an

organic solvent. In the present invention, the term "(meth)acrylic" means methacrylic and acrylic.

Preferably, the acrylic resin is substantially free of auxiliary raw materials such as a polymerization initiator, a chain transfer agent, and an organic solvent. Also, in view of the effects of the present invention, the acrylic resin is preferably one having a relatively narrow composition distribution or molecular weight distribution, obtained by continuous polymerization.

As described above, the acrylic resin is preferably one which is substantially free of auxiliary raw materials such as a polymerization initiator, a chain transfer agent, and an organic solvent, namely which is of high purity. The acrylic resin preferably has a purity (resin content in the resin) of 95% by mass or more, more preferably 97% by mass or more.

Examples of the monomer component of the acrylic resin include (meth)acrylic acid and (meth)acrylic acid derivatives such as (meth)acrylic acid esters (alkyl esters, aryl esters, aralkyl esters, and the like), (meth) acrylamide, and (meth) acrylamide derivatives. The term "(meth)acrylic acid" is a general term for acrylic acid and methacrylic acid.

Aromatic vinyls such as styrene, α-methylstyrene, vinyltoluene, vinylnaphthalene, divinylbenzene, trivinylbenzene, or divinylnaphthalene may be used as monomer components of the acrylic resin together with (meth)acrylic acid or a (meth)acrylic acid derivative.

The acrylic resin may be formed only of the (meth) acrylic component or may further contain constituent components other than the (meth)acrylic component. In view of more suitably achieving the effects of the present invention, the acrylic resin is preferably a styrene acrylic resin (solvent-free styrene acrylic resin) containing a constituent component derived from styrene together with the (meth) acrylic component.

The acrylic resin may contain a hydroxyl group, a carboxyl group, a silanol group, or the like. Particularly, in view of more suitably achieving the effects of the present invention, the acrylic resin preferably contains a hydroxyl group or a carboxyl group, and more preferably a carboxyl group.

Examples of the acrylic resin include ARUFON series (UH-2170, UC-3000, UC-3900, UC-3920, UF-5080, UF-5022, UG-4035, UG-4040, UG-4070) available from Toagosei Co., Ltd.

The acrylic resin preferably has a hydroxyl value (OH value) of 15 mg KOH/g or more, more preferably 30 mg KOH/g or more, still more preferably 50 mg KOH/g or more. Also, the OH value is preferably 250 mg KOH/g or less, more preferably 200 mg KOH/g or less, still more preferably 120 mg KOH/g or less. If the OH value is less than 15 mg KOH/g, high levels of initial grip and grip performance stability may not be obtained simultaneously. If the OH value is more than 250 mg KOH/g, the resin may be poorly compatible with the rubber component, and therefore sufficient breaking properties may not be obtained and abrasion resistance may be markedly deteriorated.

<Urethanic resin>

The urethanic resin is described below. The properties of the resin other than those described for the resinous organic compound are mainly described.

Herein, the urethanic resin contains a urethane bond-containing compound as a main component, and is typically obtained by reacting a polyol and a polyisocyanate by a usual method.

The urethanic resin may be formed only of the urethane compound-derived component or may contain constituent components other than the urethane compound-derived component. In view of more suitably achieving the effects of the present invention, the urethanic resin is preferably an aromatic urethane resin containing a constituent component derived from an aromatic compound together with the urethane compound-derived component, or an aliphatic urethane resin containing a constituent component derived from an aliphatic compound together with the urethane compound-derived component, with the aliphatic urethane resin being more preferred. Moreover, in view of more suitably achieving the effects of the present invention, the aromatic urethane resin or the aliphatic urethane resin preferably further contains a constituent component derived from a (meth) acrylic acid or a (meth) acrylic acid derivative.

The urethanic resin preferably has a hydroxyl value (OH value) of 400 mg KOH/g or less, more preferably 45 mg KOH/g or less, still more preferably 10 mg KOH/g or less, particularly preferably 5 mg KOH/g or less, most preferably 1 mg KOH/g or less, even most preferably 0.1 mg KOH/g or less. Especially preferably, the hydroxyl value is 0 mg KOH/g. A urethanic resin having a hydroxyl value of more than 400 mg KOH/g may have higher self-aggregation properties and a lower affinity with rubber or filler, thereby failing to provide sufficient grip performance.

In view of more suitably achieving the effects of the present invention, the resinous organic compound is preferably a hydrogenated terpenic resin or a hydrogenated aromatic resin, more preferably a hydrogenated aromatic-modified terpene resin, a hydrogenated terpene phenol resin, or a hydrogenated alkylphenol resin, and particularly preferably a hydrogenated alkylphenol resin.

In view of more suitably achieving the effects of the present invention, preferred combinations of the polymer and the resinous organic compound include combinations of the high molecular weight polymer and at least one selected from the group consisting of the terpenic resin, the aromatic resin, and the acrylic resin, more preferably combinations of the high molecular weight polymer, the low molecular weight polymer, and at least one selected from the group

consisting of the terpenic resin, the aromatic resin, and the acrylic resin.

The polymer may be mixed with the resinous organic compound by any method. Exemplary methods include mechanical mixing in which they are mixed in the solid state using an internal mixer such as a Banbury mixer or a kneader, or a kneading device such as an open roll mill; or solution mixing in which the polymer and the resinous organic compound are mixed in solution. Particularly, in view of more suitably achieving the effects of the present invention, solution mixing is preferred. In the case of solution mixing, the polymer and the resinous organic compound are preferably completely dissolved during mixing, but these components may be partially undissolved.

The solvent for dissolving the polymer and the resinous organic compound may be any solvent that can dissolve these compounds, including non-polar solvents and polar solvents. Examples of non-polar solvents include hydrocarbon solvents such as toluene, normal hexane, cyclohexane, xylene, or benzene; and halogenated hydrocarbon solvents such as trichloroethane, tetrachloroethane, dichloroethane, dichloromethane, or chloroform. Examples of polar solvents include ketone solvents such as acetone or methyl ethyl ketone; ester solvents such as ethyl acetate; ether solvents such as tetrahydrofuran or dioxane; alcohol solvents such as methanol, ethanol, or propanol; and acetonitrile, dimethylacetamide, dimethylformamide, and dimethyl sulfoxide.

Examples of the method for mixing the solution in the solution mixing include methods using known stirring devices such as a blender mill, an ultrasonic homogenizer, or a stirring blade. Known heaters such as an oil bath or an incubation chamber may also be used as needed.

In the solution mixing, mixing may be carried out by, for example, a method in which a polymer solution is put in a known stirring device such as a blender mill, and a resinous organic compound solution is added dropwise thereto with stirring; or a method in which a polymer solution is added to a resinous organic compound solution under stirring. In another exemplary method, a solid resinous organic compound is added to a polymer solution, and they are mixed while dissolving the resinous organic compound. In a similar exemplary method, a solid polymer is added to a resinous organic compound solution, and they are mixed while dissolving the polymer.

The mixing temperature and time in the solution mixing are preferably at 10°C to 200°C for 1 to 12 hours, more preferably at 40°C to 120°C for 2 to 8 hours, because the above conditions allow a uniform polymer composite to be produced.

The polymer composite can be obtained by drying the resulting mixed solution by a known method. The mixed solution may be dried naturally, or may be dried using known driers such as a vacuum dryer, an air dryer, a drum dryer, a band dryer, a hot air dryer, or a kiln dryer.

In the case of mechanical mixing, on the other hand, the polymer and the resinous organic compound are mixed in the solid state using the kneading device to give the polymer composite.

The mixing is preferably carried out so that the polymer composite has a compositional ratio described below. The polymer composite of the pneumatic tire of the present invention may contain other components as long as they do not inhibit the effects of the present invention.

(Composition of polymer composite)

The composition of the polymer composite is not particularly limited. The polymer composite preferably contains the resinous organic compound in an amount of 1 to 200 parts by mass, more preferably 3 to 120 parts by mass, still more preferably 5 to 50 parts by mass, relative to 100 parts by mass of the polymer in the polymer composite. If the amount is less than 1 part by mass, a sufficient adhesion effect may not be obtained and grip performance may not be improved. If the amount is more than 200 parts by mass, sufficient breaking properties may not be obtained and abrasion resistance may be markedly deteriorated.

The polymer composite preferably contains the high molecular weight polymer in an amount of 40 to 100% by mass based on 100% by mass of the polymer in the polymer composite, with the lower limit being more preferably 45% by mass or more. The above amount range allows the effects of the present invention to be more suitably achieved.

The polymer composite preferably contains SBR in an amount of 40% by mass or more, more preferably 60% by mass or more, still more preferably 80% by mass or more, particularly preferably 100% by mass, based on 100% by mass of the high molecular weight polymer in the polymer composite. The above amount range allows the effects of the present invention to be more suitably achieved.

The polymer composite preferably contains the low molecular weight polymer in an amount of 10 to 150 parts by mass, more preferably 50 to 120 parts by mass, still more preferably 80 to 110 parts by mass, relative to 100 parts by mass of the high molecular weight polymer in the polymer composite. The above amount range allows the effects of the present invention to be more suitably achieved.

The polymer composite preferably contains the resinous organic compound in an amount of 1 to 200 parts by mass, more preferably 3 to 120 parts by mass, still more preferably 5 to 50 parts by mass, relative to 100 parts by mass of the high molecular weight polymer in the polymer composite. The above amount range allows the effects of the present invention to be more suitably achieved.

<<Rubber composition for tires>>

The rubber composition for tires of the pneumatic tire of the present invention contains the above-described polymer composite.

In view of more suitably achieving the effects of the present invention, the rubber composition preferably contains the polymer composite in an amount of 5 to 60% by mass, more preferably 10 to 55% by mass, based on 100% by mass of the rubber composition.

The rubber composition of the pneumatic tire of the present invention may optionally contain an additional rubber component in addition to the rubber component (the high molecular weight polymer) contained in the polymer composite. Examples of the additional rubber component include the diene rubbers mentioned above. These materials may be used alone or in combination of two or more. Among these, NR, BR, and SBR are preferred, and SBR is more preferred, because they provide a good balance of grip performance and abrasion resistance.

In view of more suitably achieving the effects of the present invention, an amount of 5% by mass or more based on 100% by mass of the total rubber component in the rubber composition of the pneumatic tire of the present invention is preferably derived from the polymer composite. The amount is more preferably 15% by mass or more, still more preferably 40% by mass or more, particularly preferably 60% by mass or more, most preferably 80% by mass or more, even most preferably 100% by mass.

The amount of SBR based on 100% by mass of the total rubber component in the rubber composition of the pneumatic tire of the present invention is preferably 40% by mass or more, more preferably 60% by mass or more, still more preferably 80% by mass or more, particularly preferably 100% by mass. The above amount range allows the effects of the present invention to be more suitably achieved.

In view of more suitably achieving the effects of the present invention, an amount of 5% by mass or more based on 100% by mass of the total SBR in the rubber composition of the pneumatic tire of the present invention is preferably derived from the polymer composite. The amount is more preferably 15% by mass or more, still more preferably 40% by mass or more, particularly preferably 60% by mass or more, most preferably 80% by mass or more, even most preferably 100% by mass.

The rubber composition of the pneumatic tire of the present invention may optionally contain an additional resinous organic compound as described above in addition to the resinous organic compound contained in the polymer composite.

The amount of the resinous organic compound in the rubber composition of the pneumatic tire of the present invention is preferably 1 to 200 parts by mass, more preferably 3 to 120 parts by mass, still more preferably 5 to 50 parts by mass, relative to 100 parts by mass of the rubber component in the rubber composition. The above amount range allows the effects of the present invention to be more suitably achieved.

In view of more suitably achieving the effects of the present invention, an amount of 40% by mass or more based on 100% by mass of the total resinous organic compound in the rubber composition of the pneumatic tire of the present invention is preferably derived from the polymer composite. The amount is more preferably 50% by mass or more, still more preferably 60% by mass or more, particularly preferably 80% by mass or more, most preferably 100% by mass.

The amount of the low molecular weight polymer in the rubber composition of the pneumatic tire of the present invention is preferably 10 to 250 parts by mass, more preferably 20 to 220 parts by mass, still more preferably 30 to 220 parts by mass, relative to 100 parts by mass of the rubber component in the rubber composition. The above amount range allows the effects of the present invention to be more suitably achieved.

In view of more suitably achieving the effects of the present invention, an amount of 40% by mass or more based on 100% by mass of the total low molecular weight polymer in the rubber composition of the pneumatic tire of the present invention is preferably derived from the polymer composite. The amount is more preferably 50% by mass or more, still more preferably 60% by mass or more, particularly preferably 80% by mass or more, most preferably 100% by mass.

The rubber composition of the pneumatic tire of the present invention preferably contains carbon black. In this case, the effects of the present invention can be more suitably achieved.

The carbon black preferably has a nitrogen adsorption specific surface area ($N_2SA$) of 80 $m^2/g$ or more, more preferably 100 $m^2/g$ or more. Also, the $N_2SA$ is preferably 600 $m^2/g$ or less, more preferably 250 $m^2/g$ or less, still more preferably 180 $m^2/g$ or less. If the $N_2SA$ is less than 80 $m^2/g$, grip performance tends to be reduced. Carbon black having a $N_2SA$ of more than 600 $m^2/g$ is difficult to disperse well, and therefore abrasion resistance tends to be reduced. The nitrogen adsorption specific surface area of carbon black is measured in accordance with JIS K 6217-2:2001.

The carbon black preferably has an oil absorption number (OAN) of 50 mL/100 g or more, more preferably 70 mL/100 g or more. Also, the OAN is preferably 250 mL/100 g or less, more preferably 200 mL/100 g or less, still more preferably 135 mL/100 g or less. If the OAN is less than 50 mL/100 g, sufficient abrasion resistance may not be obtained. If the OAN is more than 250 mL/100 g, grip performance may be reduced. The OAN of carbon black is measured in

accordance with JIS K 6217-4:2001.

In the case of the rubber composition containing carbon black, the amount of carbon black relative to 100 parts by mass of the rubber component is preferably 50 parts by mass or more, more preferably 80 parts by mass or more, still more preferably 100 parts by mass or more, while it is preferably 200 parts by mass or less, more preferably 150 parts by mass or less. If the amount is less than 50 parts by mass, sufficient abrasion resistance or grip performance may not be obtained. If the amount is more than 200 parts by mass, grip performance may be reduced.

The rubber composition of the pneumatic tire of the present invention may appropriately contain, in addition to the components described above, various materials usually used in the tire industry, including, for example, fillers such as silica, silane coupling agents, wax, zinc oxide, stearic acid, antioxidants, vulcanizing agents such as sulfur, and vulcanization accelerators.

Any zinc oxide may be used in the present invention, including those used in the field of rubber such as tires. In view of more suitably achieving the effects of the present invention, the zinc oxide may suitably be finely divided zinc oxide. Specifically, the zinc oxide preferably has an average primary particle size of 200 nm or smaller, more preferably 120 nm or smaller, still more preferably 100 nm or smaller. The lower limit of the average primary particle size is not particularly limited, and is preferably 20 nm or larger, more preferably 30 nm or larger. The average primary particle size of zinc oxide is an average particle size (average primary particle size) which is calculated from the specific surface area as determined by the BET method based on nitrogen adsorption.

In the case of the rubber composition containing zinc oxide, the amount of zinc oxide relative to 100 parts by mass of the rubber component is preferably 0.5 to 10 parts by mass, more preferably 1 to 5 parts by mass. If the amount of zinc oxide is within the above range, the effects of the present invention can be more suitably achieved.

Examples of the vulcanization accelerator include sulfenamide vulcanization accelerators, thiazole vulcanization accelerators, thiuram vulcanization accelerators, and guanidine vulcanization accelerators. Among these, thiazole vulcanization accelerators and thiuram vulcanization accelerators are suitable in the present invention.

Examples of thiazole vulcanization accelerators include 2-mercaptobenzothiazole, cyclohexylamine salts of 2-mercaptobenzothiazole, and di-2-benzothiazolyl disulfide. Di-2-benzothiazolyl disulfide is preferred among these. Examples of thiuram vulcanization accelerators include tetramethylthiuram disulfide (TMTD), tetrabenzylthiuram disulfide (TBzTD), and tetrakis(2-ethylhexyl)thiuram disulfide (TOT-N). TOT-N is preferred among these.

In the case of the rubber composition containing a vulcanization accelerator, the amount of vulcanization accelerator relative to 100 parts by mass of the rubber component is preferably 1 part by mass or more, more preferably 3 parts by mass or more, while it is preferably 15 parts by mass or less, more preferably 10 parts by mass or less. If the amount is less than 1 part by mass, a sufficient vulcanization rate tends not to be obtained and good grip performance or abrasion resistance tends not to be obtained. If the amount is more than 15 parts by mass, blooming may occur and grip performance or abrasion resistance may be reduced.

The rubber composition of the pneumatic tire of the present invention can be prepared by common methods. Specifically, the rubber composition may be prepared, for example, by kneading the above-described components using a Banbury mixer, a kneader, or an open roll mill, and then vulcanizing the kneaded mixture. The rubber composition can be used in treads of pneumatic tires.

<Pneumatic tire>

The pneumatic tire of the present invention can be prepared using the rubber composition by usual methods. Specifically, the rubber composition containing the components, before vulcanization, is extruded into the shape of a read, and is then assembled with other tire components on a tire building machine by a usual method to build an unvulcanized tire, which is then heated and pressurized in a vulcanizer, thereby producing a pneumatic tire of the present invention.

The pneumatic tire of the present invention can be suitably used as a tire for passenger vehicles, trucks and buses, or two-wheel vehicles, or as a high performance tire. Among these, it can be suitably used as a high performance tire, and especially as a high performance dry tire. Herein, the term "high performance tire" refers to a tire with particularly excellent grip performance, conceptually including racing tires to be used in racing vehicles. Also, the term "dry tire" herein refers to a tire with particularly excellent dry-grip performance.

EXAMPLES

The present invention is specifically described with reference to, but not limited to, examples below.

Various chemicals used in Examples and Comparative Examples are collectively listed below. The various chemicals were purified before use.

Hexane: Anhydrous hexane available from Kanto Chemical Co., Inc.

Toluene: Toluene of special grade available from Kanto Chemical Co., Inc.

Isopropanol: Isopropanol of special grade available from Kanto Chemical Co., Inc.

TMEDA: Tetramethylethylenediamine available from Kishida Chemical Co., Ltd.

Butadiene: 1,3-butadiene available from Takachiho Chemical Industrial Co., Ltd.

Styrene: Styrene available from Wako Pure Chemical Industries, Ltd.

Myrcene: Myrcene available from Wako Pure Chemical Industries, Ltd.

Farnesene: Farnesene available from Nippon Terpene Chemicals, Inc.

Tetrahydrofuran: Product of Kanto Chemical Co., Inc. Palladium carbon: Product of Kanto Chemical Co., Inc. Polymer 1: Styrene-butadiene copolymer prepared in below-described Production Example A (styrene content: 40% by mass, Mw: 1,000,000, Tg: -20°C)

Polymer 2: Styrene-butadiene copolymer prepared in below-described Production Example B (styrene content: 20% by mass, Mw: 5,100, Tg: -26°C)

Polymer 3: Styrene-butadiene copolymer prepared in below-described Production Example C (styrene content: 40% by mass, Mw: 5,100, Tg: -8°C)

Polymer 4: Styrene-myrcene copolymer prepared in below-described Production Example D (styrene content: 45% by mass, Mw: 6,100, Tg: -30°C)

Polymer 5: Styrene-farnesene copolymer prepared in below-described Production Example E (styrene content: 50% by mass, Mw: 8,700, Tg: -36°C)

Polymer 6: 95 mol% hydrogenated product of Polymer 3 prepared in below-described Production Example F (Mw: 5,200, Tg: -2°C)

Polymer 7: 95 mol% hydrogenated product of Polymer 4 prepared in below-described Production Example G (Mw: 6,100, Tg: -15°C)

Polymer 8: 95 mol% hydrogenated product of Polymer 5 prepared in below-described Production Example H (Mw: 8,700, Tg: -18°C)

Carbon black: Seast 9 (SAF, $N_2SA$: 142 $m^2/g$, OAN number: 115 mL/100 g) available from Tokai Carbon Co., Ltd.

Oil: Diana Process AH-24 (aromatic process oil) available from Idemitsu Kosan Co., Ltd.

Resin 1: UH2170 (acrylic resin, Mw: 14,000, OH value: 88 mg KOH/g, Tg: 60°C) available from Toagosei Co., Ltd.

Resin 2: YS resin SX100 (aromatic resin (styrene resin), Mw: 500, Tg: 95°C, softening point: 100°C) available from Yasuhara Chemical Co., Ltd.

Resin 3: YS resin PX1250 (terpene resin, Mw: 1,100, OH value: 0 mg KOH/g, Tg: 67°C, softening point: 125°C) available from Yasuhara Chemical Co., Ltd.

Resin 4: YS resin TO125 (aromatic-modified terpene resin, Mw: 700, OH value: 0 mg KOH/g, Tg: 64°C, softening point: 125°C) available from Yasuhara Chemical Co., Ltd.

Resin 5: YS Polyster U115 (terpene phenol resin, Mw: 700, OH value: 40 mg KOH/g, Tg: 67°C, softening point: 115°C) available from Yasuhara Chemical Co., Ltd.

Resin 6: Koresin (alkylphenol resin (p-t-butylphenol-acetylene condensation resin), Mw: 400, OH value: 320 mg KOH/g, Tg: 98°C) available from BASF

Resin 7: ALIPHATIC URETHANE ACRYLATE (aliphatic urethane resin, Mw: 900, OH value: 0 mg KOH/g, Tg: 61°C) available from Sartomer

Resin 8: ESCURON V120 (coumarone-indene resin, Mw: 500, hydroxyl value: 30 mg KOH/g, Tg: 70°C, softening point: 120°C) available from Nitto Chemical Co., Ltd.

Resin 9: Clearon P125 (hydrogenated terpene resin, rate of hydrogenation: 100 mol%, Mw: 700, OH value: 0 mg KOH/g, Tg: 74°C, softening point: 125°C) available from Yasuhara Chemical Co., Ltd.

Resin 10: Clearon M125 (hydrogenated aromatic-modified terpene resin, rate of hydrogenation: 100 mol%, Mw: 600, OH value: 0 mg KOH/g, Tg: 70°C, softening point: 125°C) available from Yasuhara Chemical Co., Ltd.

Resin 11: YS Polyster UH115 (hydrogenated terpene phenol resin, rate of hydrogenation: 100 mol%, Mw: 600, OH value: 0 mg KOH/g, Tg: 73°C, softening point: 115°C) available from Yasuhara Chemical Co., Ltd.

Resin 12: 95 mol% hydrogenated product of Resin 6 prepared in below-described Production Example I (hydrogenated alkylphenol resin, Mw: 400, OH value: 15 mg KOH/g, Tg: 86°C, softening point: 135°C)

Zinc oxide: ZINCOX SUPER F-1 (average primary particle size: 100 nm) available from HakusuiTech Co., Ltd.

Wax: Sunnoc N available from Ouchi Shinko Chemical Industrial Co., Ltd.

Antioxidant 1: Antigene 6C (N-phenyl-N'-(1,3-dimethylbutyl)-p-phenylenediamine) available from Sumitomo Chemical Co., Ltd.

Antioxidant 2: Antigene RD (poly (2,2,4-trimethyl-1,2-dihydro quinoline)) available from Sumitomo Chemical Co., Ltd.

Stearic acid: Stearic acid "Tsubaki" available from NOF Corporation

Sulfur: Powdered sulfur available from Karuizawa sulfur

Vulcanization accelerator 1: Nocceler DM (di-2-benzothiazolyl disulfide) available from Ouchi Shinko Chemical Industrial Co., Ltd.

Vulcanization accelerator 2: Nocceler TOT-N (tetrakis(2-ethylhexyl)thiuram disulfide) available from Ouchi Shinko Chemical Industrial Co., Ltd.

(Production Example A) Preparation of Polymer 1

An amount of 1,800 g of hexane, 120 g of butadiene, and 80 g of styrene together with 0.22 mmol of TMEDA were introduced into a dried and nitrogen-purged 3 L pressure-resistant stainless steel polymerization vessel. Next, a small amount of a solution of n-butyllithium in hexane was introduced into the polymerization vessel as a scavenger for preliminarily detoxifying impurities which serve to deactivate the polymerization initiator. After a solution of n-butyllithium in hexane (in an amount equivalent to 0.2 mmol n-butyllithium) was further added, a polymerization reaction was performed at 50°C for 3 hours. Three hours later, 1 mL of a solution of 1M isopropanol in hexane was added dropwise to terminate the reaction. Thereafter, the polymerization solution was evaporated at room temperature for 24 hours, and further dried in vacuo at 80°C for 24 hours to give Polymer 1. The polymerization conversion ratio was almost 100%. The copolymer thus obtained had a weight average molecular weight of 1,000,000 with a molecular weight distribution of 1.01.

(Production Example B) Preparation of Polymer 2

An amount of 200 g of hexane was introduced into a dried and nitrogen-purged 3 L pressure-resistant stainless steel vessel equipped with a stirring blade, and 800 g of butadiene and 200 g of styrene were dissolved therein. Then, 10 g of tetrahydrofuran (THF) and a small amount of a solution of n-butyllithium in hexane as a scavenger for preliminarily detoxifying impurities which serve to deactivate the polymerization initiator were introduced into the polymerization vessel. Next, after a solution of n-butyllithium in hexane (in an amount equivalent to 0.2 mol n-butyllithium) was added, a polymerization reaction was performed at 50°C for 3 hours. Three hours later, a solution of 1M isopropanol in hexane (in an amount equivalent to 0.4 mol isopropanol) was added dropwise to terminate the reaction. Thereafter, the polymerization solution was evaporated at room temperature for 24 hours, and further dried in vacuo at 80°C for 24 hours to give Polymer 2. The polymerization conversion ratio was almost 100%. The copolymer thus obtained had a weight average molecular weight of 5,100 with a molecular weight distribution of 1.01.

(Production Example C) Preparation of Polymer 3

An amount of 1,000 g of Polymer 3 was prepared in the same manner as in Production Example B, except that the monomers used were changed to 600 g of butadiene and 400 g of styrene. The copolymer thus obtained had a weight average molecular weight of 5,100 with a molecular weight distribution of 1.01.

(Production Example D) Preparation of Polymer 4

An amount of 1,000 g of Polymer 4 was prepared in the same manner as in Production Example B, except that the monomers used were changed to 550 g of myrcene and 450 g of styrene. The copolymer thus obtained had a weight average molecular weight of 6,100 with a molecular weight distribution of 1.06.

(Production Example E) Preparation of Polymer 5

An amount of 1,000 g of Polymer 5 was prepared in the same manner as in Production Example B, except that the monomers used were changed to 500 g of farnesene and 500 g of styrene. The copolymer thus obtained had a weight average molecular weight of 8,700 with a molecular weight distribution of 1.10.

(Production Example F) Preparation of Polymer 6

An amount of 1, 000 g of Polymer 3, 200 g of tetrahydrofuran (THF), and 20 g of 10% palladium carbon were put in a 3 L pressure-resistant stainless steel vessel, and the vessel was purged with nitrogen and then purged with hydrogen at a pressure of 5.0 kg/cm$^2$. The reaction was carried out for 6 hours while hydrogen was continuously supplied until absorption of hydrogen at 80°C ceased.

Next, the resulting hydrogenated product solution was filtered through a 1 μm-mesh PTFE filter, and then the Polymer 6 solution was evaporated at room temperature for 24 hours, and further dried in vacuo at 80°C for 24 hours to give 1,000 g of Polymer 6.

The rate of hydrogenation of the non-conjugated double bonds was 95 mol% as calculated from a decrease in non-conjugated unsaturated bonds in a 100 MHz proton NMR spectrum of a 15% by mass solution in carbon tetrachloride solvent.

Polymer 6 had a weight average molecular weight of 5,200 with a molecular weight distribution of 1.01.

(Production Example G) Preparation of Polymer 7

An amount of 1,000 g of Polymer 7 was prepared in the same manner as in Production Example F, except that Polymer 3 was changed to Polymer 4. Polymer 7 had a rate of hydrogenation of 95 mol%, and a weight average molecular weight of 6,100 with a molecular weight distribution of 1.01.

(Production Example H) Preparation of Polymer 8

An amount of 1,000 g of Polymer 8 was prepared in the same manner as in Production Example F, except that Polymer 3 was changed to Polymer 5. Polymer 8 had a rate of hydrogenation of 95 mol%, and a weight average molecular weight of 8,700 with a molecular weight distribution of 1.10.

(Production Example I) Preparation of Resin 12

An amount of 200 g of Resin 6, 200 g of tetrahydrofuran (THF), and 20 g of 10% palladium carbon were put in a 3 L pressure-resistant stainless steel vessel, and the vessel was purged with nitrogen and then purged with hydrogen at a pressure of 5.0 kg/$cm^2$. The reaction was carried out for 8 hours while hydrogen was continuously supplied until absorption of hydrogen at 80°C ceased.

Next, the resulting hydrogenated product solution was filtered through a 1 μm-mesh PTFE filter, and then the solution was evaporated at room temperature for 24 hours, and further dried in vacuo at 80°C for 24 hours to give 200 g of Resin 12.

The rate of hydrogenation of the non-conjugated double bonds was 95 mol% as calculated from a decrease in non-conjugated unsaturated bonds in a 100 MHz proton NMR spectrum of a 15% by mass solution in carbon tetrachloride solvent.

Resin 12 had a weight average molecular weight of 400 with a molecular weight distribution of 1.4.

(Production Example J) Preparation of Polymer composites 1-1 to 1-12 (mechanical mixing)

Using a 1.7 L Banbury mixer available from Kobe Steel, Ltd., Polymer 1 and one of Resins 1 to 12 were weighed out at the mass ratio shown in Table 1, and Polymer 1 alone was mechanically stirred for 1 minute. Then, each resin was added and mechanically stirred for 3 minutes. Thus, Polymer composites 1-1 to 1-12 were obtained.

(Production Example K) Preparation of Polymer composite 2-1 (solution mixing)

An amount of 100 g of Polymer 1 and 900 g of toluene were put in a 1 L glass flask, and stirred at 100°C for 8 hours to give 1,000 g of a solution of 10% by mass Polymer 1 in toluene. Next, 100 g of Resin 1 and 900 g of acetone were put in a 1 L glass flask, and stirred at 40°C for 4 hours to give 1,000 g of a solution of 10% by mass Resin 1 in acetone. Then, the solution of Polymer 1 in toluene and the solution of Resin 1 in acetone were put in a 1 L glass flask so that the mass ratio of Polymer 1 to Resin 1 was adjusted to the ratio shown in Table 2, followed by stirring at room temperature for 1 hour. Thereafter, the mixed solution of Polymer 1 and Resin 1 was concentrated in vacuo at 80°C and 0.1 mmHg or lower for 8 hours or longer to give a Polymer 1/Resin 1 composite (Polymer composite 2-1).

(Production Example L) Preparation of Polymer composites 2-2 to 2-12

Polymer composites 2-2 to 2-12 were prepared in the same manner as in Production Example K, except that the resin used was changed as shown in Table 2.

(Production Example M) Preparation of Polymer composites 3-1 to 3-84

Polymer composites 3-1 to 3-84 were prepared in the same manner as in Production Example J, except that one of Polymers 2 to 8 was added at the mass ratio shown in Tables 3.

(Production Example N) Preparation of Polymer composite 4-1

Polymer composite 4-1 was prepared in the same manner as in Production Example K, except that Polymer

2 was added at the mass ratio shown in Table 4.

(Production Example O) Preparation of Polymer composites 4-2 to 4-84

Polymer composites 4-2 to 4-84 were prepared in the same manner as in Production Example L, except that one of Polymers 2 to 8 was added at the mass ratio shown in Tables 4.

<Examples and Comparative Examples>

According to the formulations shown in Tables 5 to 8, the compounding materials excluding the sulfur and vulcanization accelerators were kneaded with a 1.7 L Banbury mixer available from Kobe Steel, Ltd. The sulfur and vulcanization accelerators were added to the kneaded mixture and kneaded using an open roll mill to give an unvulcanized rubber composition. The unvulcanized rubber composition was shaped into a tread and assembled with other tire components on a tire building machine, followed by vulcanization at 150°C for 30 minutes to give a test tire (tire size: 215/45R17).
The thus-prepared test tires were evaluated for the following items. Tables 5 to 8 show the results.

(Processability)

Adhesion of the rubber to the rotor during kneading or to the metal part during rolling was evaluated based on the following criteria.
Poor: Very poor processability with very close adhesion
Fair: Poor processability with adhesion
Good: Good processability with slight adhesion
Excellent: Very good processability with no adhesion

(Initial grip performance)

The test tires were mounted on a front-engine, rear-wheel-drive car of 2,000 cc displacement made in Japan. A test driver drove the car 10 laps around a test track with a dry asphalt surface. The test driver evaluated the control stability during steering of the car in the second lap. The results are expressed as an index (initial grip performance index) relative to Comparative Example 1-1. A higher index indicates better initial grip performance.

(Grip performance stability)

The test tires were mounted on a front-engine, rear-wheel-drive car of 2,000 cc displacement made in Japan. A test driver drove the car 10 laps around a test track with a dry asphalt surface. The test driver evaluated and compared the control stability during steering of the car between the best lap and the final lap. The results are expressed as an index relative to Comparative Example 1-1. A higher index indicates a smaller reduction in grip performance stability on the dry road, and thus indicates better grip performance stability.

(Abrasion resistance)

The test tires were mounted on a front-engine, rear-wheel-drive car of 2,000 cc displacement made in Japan. The car was driven on a test track with a dry asphalt surface. Then, the depth of the grooves remaining in the tire tread rubber (initial depth: 15 mm) was measured. The measured depths are expressed as an index (abrasion resistance index) relative to Comparative Example 1-1. A higher index indicates higher abrasion resistance.

[Table 1]

| Polymer composite | | 1-1 | 1-2 | 1-3 | 1-4 | 1-5 | 1-6 | 1-7 | 1-8 | 1-9 | 1-10 | 1-11 | 1-12 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 2]

| Polymer composite | | 2-1 | 2-2 | 2-3 | 2-4 | 2-5 | 2-6 | 2-7 | 2-8 | 2-9 | 2-10 | 2-11 | 2-12 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-1]

| Polymer composite | | 3-1 | 3-2 | 3-3 | 3-4 | 3-5 | 3-6 | 3-7 | 3-8 | 3-9 | 3-10 | 3-11 | 3-12 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | 100 | 100 | 100 | 100 | 100 | 100 | 100 | 100 | 100 | 100 | 100 | 100 |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-2]

| Polymer composite | | 3-13 | 3-14 | 3-15 | 3-16 | 3-17 | 3-18 | 3-19 | 3-20 | 3-21 | 3-22 | 3-23 | 3-24 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | 100 | 100 | 100 | 100 | 100 | 100 | 100 | 100 | 100 | 100 | 100 | 100 |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-3]

| Polymer composite | | 3-25 | 3-26 | 3-27 | 3-28 | 3-29 | 3-30 | 3-31 | 3-32 | 3-33 | 3-34 | 3-35 | 3-36 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | 100 | 100 | 100 | 100 | 100 | 100 | 100 | 100 | 100 | 100 | 100 | 100 |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-4]

| Polymer composite | | 3-37 | 3-38 | 3-39 | 3-40 | 3-41 | 3-42 | 3-43 | 3-44 | 3-45 | 3-46 | 3-47 | 3-48 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | 100 | 100 | 100 | 100 | 100 | 100 | 100 | 100 | 100 | 100 | 100 | 100 |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-5]

| Polymer composite | | 3-49 | 3-50 | 3-51 | 3-52 | 3-53 | 3-54 | 3-55 | 3-56 | 3-57 | 3-58 | 3-59 | 3-60 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | 100 | 100 | 100 | 100 | 100 | 100 | 100 | 100 | 100 | 100 | 100 | 100 |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-6]

| Polymer composite | | 3-61 | 3-62 | 3-63 | 3-64 | 3-65 | 3-66 | 3-67 | 3-68 | 3-69 | 3-70 | 3-71 | 3-72 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | 100 | 100 | 100 | 100 | 100 | 100 | 100 | 100 | 100 | 100 | 100 | 100 |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 3-7]

| Polymer composite | | 3-73 | 3-74 | 3-75 | 3-76 | 3-77 | 3-78 | 3-79 | 3-80 | 3-81 | 3-82 | 3-83 | 3-84 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | 100 | 100 | 100 | 100 | 100 | 100 | 100 | 100 | 100 | 100 | 100 | 100 |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-1]

| Polymer composite | | 4-1 | 4-2 | 4-3 | 4-4 | 4-5 | 4-6 | 4-7 | 4-8 | 4-9 | 4-10 | 4-11 | 4-12 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | 100 | 100 | 100 | 100 | 100 | 100 | 100 | 100 | 100 | 100 | 100 | 100 |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-2]

| Polymer composite | | 4-13 | 4-14 | 4-15 | 4-16 | 4-17 | 4-18 | 4-19 | 4-20 | 4-21 | 4-22 | 4-23 | 4-24 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | 100 | 100 | 100 | 100 | 100 | 100 | 100 | 100 | 100 | 100 | 100 | 100 |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-3]

| Polymer composite | | 4-25 | 4-26 | 4-27 | 4-28 | 4-29 | 4-30 | 4-31 | 4-32 | 4-33 | 4-34 | 4-35 | 4-36 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | 100 | 100 | 100 | 100 | 100 | 100 | 100 | 100 | 100 | 100 | 100 | 100 |
| | Polymer 5 | | | | | | | | | | | | |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-4]

| Polymer composite | | 4-37 | 4-38 | 4-39 | 4-40 | 4-41 | 4-42 | 4-43 | 4-44 | 4-45 | 4-46 | 4-47 | 4-48 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | 100 | 100 | 100 | 100 | 100 | 100 | 100 | 100 | 100 | 100 | 100 | 100 |
| | Polymer 6 | | | | | | | | | | | | |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-5]

| Polymer composite | | 4-49 | 4-50 | 4-51 | 4-52 | 4-53 | 4-54 | 4-55 | 4-56 | 4-57 | 4-58 | 4-59 | 4-60 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | 100 | 100 | 100 | 100 | 100 | 100 | 100 | 100 | 100 | 100 | 100 | 100 |
| | Polymer 7 | | | | | | | | | | | | |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-6]

| Polymer composite | | 4-61 | 4-62 | 4-63 | 4-64 | 4-65 | 4-66 | 4-67 | 4-68 | 4-69 | 4-70 | 4-71 | 4-72 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | 100 | 100 | 100 | 100 | 100 | 100 | 100 | 100 | 100 | 100 | 100 | 100 |
| | Polymer 8 | | | | | | | | | | | | |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 4-7]

| Polymer composite | | 4-73 | 4-74 | 4-75 | 4-76 | 4-77 | 4-78 | 4-79 | 4-80 | 4-81 | 4-82 | 4-83 | 4-84 |
|---|---|---|---|---|---|---|---|---|---|---|---|---|---|
| Blending amount (parts by mass) | Polymer 1 | 100 | 100 | 100 | 100 | 100 | 100 | 100 | 100 | 100 | 100 | 100 | 100 |
| | Polymer 2 | | | | | | | | | | | | |
| | Polymer 3 | | | | | | | | | | | | |
| | Polymer 4 | | | | | | | | | | | | |
| | Polymer 5 | | | | | | | | | | | | |
| | Polymer 6 | | | | | | | | | | | | |
| | Polymer 7 | | | | | | | | | | | | |
| | Polymer 8 | 100 | 100 | 100 | 100 | 100 | 100 | 100 | 100 | 100 | 100 | 100 | 100 |
| | Resin 1 | 30 | | | | | | | | | | | |
| | Resin 2 | | 30 | | | | | | | | | | |
| | Resin 3 | | | 30 | | | | | | | | | |
| | Resin 4 | | | | 30 | | | | | | | | |
| | Resin 5 | | | | | 30 | | | | | | | |
| | Resin 6 | | | | | | 30 | | | | | | |
| | Resin 7 | | | | | | | 30 | | | | | |
| | Resin 8 | | | | | | | | 30 | | | | |
| | Resin 9 | | | | | | | | | 30 | | | |
| | Resin 10 | | | | | | | | | | 30 | | |
| | Resin 11 | | | | | | | | | | | 30 | |
| | Resin 12 | | | | | | | | | | | | 30 |

[Table 5]

| Comparative Example | | 1-1 | 1-2 | 1-3 | 1-4 |
|---|---|---|---|---|---|
| Polymer composite | | - | - | - | - |
| Formulation amount (parts by mass) | Polymer composite | - | - | - | - |
| | Polymer 1 | 100 | 100 | 100 | 100 |
| | Carbon black | 130 | 130 | 130 | 130 |
| | Oil | 50 | 50 | 50 | 50 |
| | Polymer 2 | 100 | 100 | 100 | 100 |
| | Resin 1 | - | 30 | - | 30 |
| | Resin 2 | - | - | 30 | 30 |
| | Zinc oxide | 2 | 2 | 2 | 2 |
| | Wax | 1 | 1 | 1 | 1 |
| | Antioxidant 1 | 1 | 1 | 1 | 1 |
| | Antioxidant 2 | 3 | 3 | 3 | 3 |
| | Stearic acid | 1 | 1 | 1 | 1 |
| | Vulcanization accelerator 2 | 3 | 3 | 3 | 3 |
| | Sulfur | 0.6 | 0.6 | 0.6 | 0.6 |
| | Vulcanization accelerator 1 | 4 | 4 | 4 | 4 |
| Evaluation result | Processability | Fair | Poor | Poor | Poor |
| | Initial grip performance (i) | 100 | 89 | 108 | 115 |
| | Grip performance stability (ii) | 100 | 122 | 105 | 121 |
| | Abrasion resistance (iii) | 100 | 91 | 92 | 89 |
| | Total of (i) to (iii) | 300 | 302 | 305 | 325 |

[Table 6-1]

| Example | | 1-1 | 1-2 | 1-3 | 1-4 | 1-5 | 1-6 | 1-7 | 1-8 | 1-9 | 1-10 | 1-11 | 1-12 |
|---|---|---|---|---|---|---|---|---|---|---|---|---|---|
| Polymer composite | | 1-1 | 1-2 | 1-3 | 1-4 | 1-5 | 1-6 | 1-7 | 1-8 | 1-9 | 1-10 | 1-11 | 1-12 |
| Formulation amount (parts by mass) | Polymer composite | 130 | 130 | 130 | 130 | 130 | 130 | 130 | 130 | 130 | 130 | 130 | 130 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Polymer 2 | 100 | 100 | 100 | 100 | 100 | 100 | 100 | 100 | 100 | 100 | 100 | 100 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 116 | 117 | 118 | 118 | 118 | 118 | 118 | 121 | 118 | 118 | 118 | 120 |
| | Grip performance stability (ii) | 122 | 123 | 125 | 126 | 125 | 125 | 125 | 121 | 123 | 121 | 122 | 125 |
| | Abrasion resistance (iii) | 100 | 101 | 102 | 101 | 101 | 101 | 101 | 101 | 101 | 105 | 106 | 103 |
| | Total of (i) to (iii) | 338 | 341 | 345 | 345 | 344 | 344 | 344 | 343 | 342 | 344 | 346 | 348 |

[Table 6-2]

| Example | | 2-1 | 2-2 | 2-3 | 2-4 | 2-5 | 2-6 | 2-7 | 2-8 | 2-9 | 2-10 | 2-11 | 2-12 |
|---|---|---|---|---|---|---|---|---|---|---|---|---|---|
| Polymer composite | | 2-1 | 2-2 | 2-3 | 2-4 | 2-5 | 2-6 | 2-7 | 2-8 | 2-9 | 2-10 | 2-11 | 2-12 |
| Formulation amount (parts by mass) | Polymer composite | 130 | 130 | 130 | 130 | 130 | 130 | 130 | 130 | 130 | 130 | 130 | 130 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Polymer 2 | 100 | 100 | 100 | 100 | 100 | 100 | 100 | 100 | 100 | 100 | 100 | 100 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 117 | 118 | 120 | 120 | 120 | 120 | 120 | 122 | 120 | 120 | 120 | 121 |
| | Grip performance stability (ii) | 123 | 125 | 126 | 127 | 126 | 126 | 126 | 122 | 124 | 122 | 123 | 126 |
| | Abrasion resistance (iii) | 101 | 102 | 103 | 102 | 102 | 102 | 102 | 102 | 102 | 106 | 107 | 104 |
| | Total of (i) to (iii) | 341 | 345 | 349 | 349 | 348 | 348 | 348 | 346 | 346 | 348 | 350 | 351 |

[Table 7-1]

| Example | | 3-1 | 3-2 | 3-3 | 3-4 | 3-5 | 3-6 | 3-7 | 3-8 | 3-9 | 3-10 | 3-11 | 3-12 |
|---|---|---|---|---|---|---|---|---|---|---|---|---|---|
| Polymer composite | | 3-1 | 3-2 | 3-3 | 3-4 | 3-5 | 3-6 | 3-7 | 3-8 | 3-9 | 3-10 | 3-11 | 3-12 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 122 | 122 | 123 | 123 | 123 | 123 | 124 | 124 | 124 | 124 | 125 | 125 |
| | Grip performance stability (ii) | 127 | 127 | 128 | 128 | 128 | 128 | 129 | 129 | 129 | 129 | 130 | 130 |
| | Abrasion resistance (iii) | 102 | 102 | 103 | 103 | 103 | 103 | 103 | 104 | 104 | 104 | 104 | 104 |
| | Total of (i) to (iii) | 351 | 351 | 354 | 354 | 354 | 354 | 356 | 357 | 357 | 357 | 359 | 359 |

[Table 7-2]

| Example | | 3-13 | 3-14 | 3-15 | 3-16 | 3-17 | 3-18 | 3-19 | 3-20 | 3-21 | 3-22 | 3-23 | 3-24 |
|---|---|---|---|---|---|---|---|---|---|---|---|---|---|
| Polymer composite | | 3-13 | 3-14 | 3-15 | 3-16 | 3-17 | 3-18 | 3-19 | 3-20 | 3-21 | 3-22 | 3-23 | 3-24 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 125 | 125 | 126 | 126 | 126 | 126 | 127 | 127 | 127 | 127 | 128 | 128 |
| | Grip performance stability (ii) | 130 | 130 | 131 | 131 | 131 | 132 | 132 | 132 | 132 | 133 | 133 | 133 |
| | Abrasion resistance (iii) | 105 | 105 | 105 | 105 | 105 | 106 | 106 | 106 | 106 | 106 | 107 | 107 |
| | Total of (i) to (iii) | 360 | 360 | 362 | 362 | 362 | 364 | 365 | 365 | 365 | 366 | 368 | 368 |

[Table 7-3]

| Example | | 3-25 | 3-26 | 3-27 | 3-28 | 3-29 | 3-30 | 3-31 | 3-32 | 3-33 | 3-34 | 3-35 | 3-36 |
|---|---|---|---|---|---|---|---|---|---|---|---|---|---|
| Polymer composite | | 3-25 | 3-26 | 3-27 | 3-28 | 3-29 | 3-30 | 3-31 | 3-32 | 3-33 | 3-34 | 3-35 | 3-36 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 128 | 128 | 129 | 129 | 129 | 129 | 130 | 130 | 130 | 130 | 131 | 131 |
| | Grip performance stability (ii) | 133 | 134 | 134 | 134 | 134 | 135 | 135 | 135 | 136 | 136 | 136 | 136 |
| | Abrasion resistance (iii) | 107 | 107 | 108 | 108 | 108 | 108 | 108 | 109 | 109 | 109 | 109 | 109 |
| | Total of (i) to (iii) | 368 | 369 | 371 | 371 | 371 | 372 | 373 | 374 | 375 | 375 | 376 | 376 |

[Table 7-4]

| Example | | 3-37 | 3-38 | 3-39 | 3-40 | 3-41 | 3-42 | 3-43 | 3-44 | 3-45 | 3-46 | 3-47 | 3-48 |
|---|---|---|---|---|---|---|---|---|---|---|---|---|---|
| Polymer composite | | 3-37 | 3-38 | 3-39 | 3-40 | 3-41 | 3-42 | 3-43 | 3-44 | 3-45 | 3-46 | 3-47 | 3-48 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 131 | 131 | 132 | 132 | 132 | 133 | 133 | 133 | 133 | 134 | 134 | 134 |
| | Grip performance stability (ii) | 137 | 137 | 137 | 137 | 138 | 138 | 138 | 139 | 139 | 139 | 139 | 140 |
| | Abrasion resistance (iii) | 110 | 110 | 110 | 110 | 111 | 111 | 111 | 111 | 111 | 112 | 112 | 112 |
| | Total of (i) to (iii) | 378 | 378 | 379 | 379 | 381 | 382 | 382 | 383 | 383 | 385 | 385 | 386 |

[Table 7-5]

| Example | | 3-49 | 3-50 | 3-51 | 3-52 | 3-53 | 3-54 | 3-55 | 3-56 | 3-57 | 3-58 | 3-59 | 3-60 |
|---|---|---|---|---|---|---|---|---|---|---|---|---|---|
| | Polymer composite | 3-49 | 3-50 | 3-51 | 3-52 | 3-53 | 3-54 | 3-55 | 3-56 | 3-57 | 3-58 | 3-59 | 3-60 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 134 | 135 | 135 | 135 | 135 | 136 | 136 | 136 | 137 | 137 | 137 | 137 |
| | Grip performance stability (ii) | 140 | 140 | 140 | 141 | 141 | 141 | 142 | 142 | 142 | 142 | 143 | 143 |
| | Abrasion resistance (iii) | 112 | 113 | 113 | 113 | 113 | 114 | 114 | 114 | 114 | 114 | 115 | 115 |
| | Total of (i) to (iii) | 386 | 388 | 388 | 389 | 389 | 391 | 392 | 392 | 393 | 393 | 395 | 395 |

[Table 7-6]

| | Example | 3-61 | 3-62 | 3-63 | 3-64 | 3-65 | 3-66 | 3-67 | 3-68 | 3-69 | 3-70 | 3-71 | 3-72 |
|---|---|---|---|---|---|---|---|---|---|---|---|---|---|
| | Polymer composite | 3-61 | 3-62 | 3-63 | 3-64 | 3-65 | 3-66 | 3-67 | 3-68 | 3-69 | 3-70 | 3-71 | 3-72 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 138 | 138 | 138 | 139 | 139 | 139 | 139 | 140 | 140 | 140 | 140 | 141 |
| | Grip performance stability (ii) | 143 | 144 | 144 | 144 | 144 | 145 | 145 | 145 | 146 | 146 | 146 | 147 |
| | Abrasion resistance (iii) | 115 | 115 | 116 | 116 | 116 | 116 | 116 | 117 | 117 | 117 | 117 | 118 |
| | Total of (i) to (iii) | 396 | 397 | 398 | 399 | 399 | 400 | 400 | 402 | 403 | 403 | 403 | 406 |

[Table 7-7]

| | Example | 3-73 | 3-74 | 3-75 | 3-76 | 3-77 | 3-78 | 3-79 | 3-80 | 3-81 | 3-82 | 3-83 | 3-84 |
|---|---|---|---|---|---|---|---|---|---|---|---|---|---|
| | Polymer composite | 3-73 | 3-74 | 3-75 | 3-76 | 3-77 | 3-78 | 3-79 | 3-80 | 3-81 | 3-82 | 3-83 | 3-84 |
| Formulation amount (parts by mass) | Polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Good | Good | Good | Good | Good | Good | Good | Good | Good | Good | Good | Good |
| | Initial grip performance (i) | 141 | 141 | 142 | 142 | 142 | 142 | 143 | 143 | 143 | 144 | 144 | 144 |
| | Grip performance stability (ii) | 147 | 147 | 147 | 148 | 148 | 148 | 149 | 149 | 149 | 149 | 150 | 150 |
| | Abrasion resistance (iii) | 118 | 118 | 118 | 119 | 119 | 119 | 119 | 120 | 120 | 120 | 120 | 121 |
| | Total of (i) to (iii) | 406 | 406 | 407 | 409 | 409 | 409 | 411 | 412 | 412 | 413 | 414 | 415 |

[Table 8-1]

| | Example | 4-1 | 4-2 | 4-3 | 4-4 | 4-5 | 4-6 | 4-7 | 4-8 | 4-9 | 4-10 | 4-11 | 4-12 |
|---|---|---|---|---|---|---|---|---|---|---|---|---|---|
| | Polymer composite | 4-1 | 4-2 | 4-3 | 4-4 | 4-5 | 4-6 | 4-7 | 4-8 | 4-9 | 4-10 | 4-11 | 4-12 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 123 | 123 | 124 | 124 | 124 | 124 | 125 | 125 | 125 | 125 | 126 | 126 |
| | Grip performance stability (ii) | 128 | 128 | 129 | 129 | 129 | 129 | 130 | 130 | 130 | 130 | 131 | 131 |
| | Abrasion resistance (iii) | 102 | 102 | 103 | 103 | 103 | 103 | 103 | 104 | 104 | 104 | 104 | 104 |
| | Total of (i) to (iii) | 353 | 353 | 356 | 356 | 356 | 356 | 358 | 359 | 359 | 359 | 361 | 361 |

[Table 8-2]

| | Example | 4-13 | 4-14 | 4-15 | 4-16 | 4-17 | 4-18 | 4-19 | 4-20 | 4-21 | 4-22 | 4-23 | 4-24 |
|---|---|---|---|---|---|---|---|---|---|---|---|---|---|
| | Polymer composite | 4-13 | 4-14 | 4-15 | 4-16 | 4-17 | 4-18 | 4-19 | 4-20 | 4-21 | 4-22 | 4-23 | 4-24 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 126 | 126 | 127 | 127 | 127 | 127 | 128 | 128 | 128 | 128 | 129 | 129 |
| | Grip performance stability (ii) | 131 | 131 | 132 | 132 | 132 | 133 | 133 | 133 | 133 | 134 | 134 | 134 |
| | Abrasion resistance (iii) | 105 | 105 | 105 | 105 | 105 | 106 | 106 | 106 | 106 | 106 | 107 | 107 |
| | Total of (i) to (iii) | 362 | 362 | 364 | 364 | 364 | 366 | 367 | 367 | 367 | 368 | 370 | 370 |

[Table 8-3]

| | Example | 4-25 | 4-26 | 4-27 | 4-28 | 4-29 | 4-30 | 4-31 | 4-32 | 4-33 | 4-34 | 4-35 | 4-36 |
|---|---|---|---|---|---|---|---|---|---|---|---|---|---|
| | Polymer composite | 4-25 | 4-26 | 4-27 | 4-28 | 4-29 | 4-30 | 4-31 | 4-32 | 4-33 | 4-34 | 4-35 | 4-36 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 129 | 129 | 130 | 130 | 130 | 130 | 131 | 131 | 131 | 132 | 132 | 132 |
| | Grip performance stability (ii) | 134 | 135 | 135 | 135 | 136 | 136 | 136 | 136 | 137 | 137 | 137 | 137 |
| | Abrasion resistance (iii) | 107 | 107 | 108 | 108 | 108 | 108 | 108 | 109 | 109 | 109 | 109 | 109 |
| | Total of (i) to (iii) | 370 | 371 | 373 | 373 | 374 | 374 | 375 | 376 | 377 | 378 | 378 | 378 |

[Table 8-4]

| Example | | 4-37 | 4-38 | 4-39 | 4-40 | 4-41 | 4-42 | 4-43 | 4-44 | 4-45 | 4-46 | 4-47 | 4-48 |
|---|---|---|---|---|---|---|---|---|---|---|---|---|---|
| Polymer composite | | 4-37 | 4-38 | 4-39 | 4-40 | 4-41 | 4-42 | 4-43 | 4-44 | 4-45 | 4-46 | 4-47 | 4-48 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 132 | 133 | 133 | 133 | 133 | 134 | 134 | 134 | 134 | 135 | 135 | 135 |
| | Grip performance stability (ii) | 138 | 138 | 138 | 139 | 139 | 139 | 139 | 140 | 140 | 140 | 140 | 141 |
| | Abrasion resistance (iii) | 110 | 110 | 110 | 110 | 111 | 111 | 111 | 111 | 111 | 112 | 112 | 112 |
| | Total of (i) to (iii) | 380 | 381 | 381 | 382 | 383 | 384 | 384 | 385 | 385 | 387 | 387 | 388 |

[Table 8-5]

| | | 4-49 | 4-50 | 4-51 | 4-52 | 4-53 | 4-54 | 4-55 | 4-56 | 4-57 | 4-58 | 4-59 | 4-60 |
|---|---|---|---|---|---|---|---|---|---|---|---|---|---|
| Example | | 4-49 | 4-50 | 4-51 | 4-52 | 4-53 | 4-54 | 4-55 | 4-56 | 4-57 | 4-58 | 4-59 | 4-60 |
| Polymer composite | | 4-49 | 4-50 | 4-51 | 4-52 | 4-53 | 4-54 | 4-55 | 4-56 | 4-57 | 4-58 | 4-59 | 4-60 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 136 | 136 | 136 | 136 | 137 | 137 | 137 | 137 | 138 | 138 | 138 | 139 |
| | Grip performance stability (ii) | 141 | 141 | 142 | 142 | 142 | 142 | 143 | 143 | 143 | 144 | 144 | 144 |
| | Abrasion resistance (iii) | 112 | 113 | 113 | 113 | 113 | 114 | 114 | 114 | 114 | 114 | 115 | 115 |
| | Total of (i) to (iii) | 389 | 390 | 391 | 391 | 392 | 393 | 394 | 394 | 395 | 396 | 397 | 398 |

[Table 8-6]

| Example | | 4-61 | 4-62 | 4-63 | 4-64 | 4-65 | 4-66 | 4-67 | 4-68 | 4-69 | 4-70 | 4-71 | 4-72 |
|---|---|---|---|---|---|---|---|---|---|---|---|---|---|
| Polymer composite | | 4-61 | 4-62 | 4-63 | 4-64 | 4-65 | 4-66 | 4-67 | 4-68 | 4-69 | 4-70 | 4-71 | 4-72 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 139 | 139 | 139 | 140 | 140 | 140 | 140 | 141 | 141 | 141 | 142 | 142 |
| | Grip performance stability (ii) | 144 | 145 | 145 | 145 | 146 | 146 | 146 | 146 | 147 | 147 | 147 | 148 |
| | Abrasion resistance (iii) | 115 | 115 | 116 | 116 | 116 | 116 | 116 | 117 | 117 | 117 | 117 | 118 |
| | Total of (i) to (iii) | 398 | 399 | 400 | 401 | 402 | 402 | 402 | 404 | 405 | 405 | 406 | 408 |

[Table 8-7]

| | Example | 4-73 | 4-74 | 4-75 | 4-76 | 4-77 | 4-78 | 4-79 | 4-80 | 4-81 | 4-82 | 4-83 | 4-84 |
|---|---|---|---|---|---|---|---|---|---|---|---|---|---|
| | Polymer composite | 4-73 | 4-74 | 4-75 | 4-76 | 4-77 | 4-78 | 4-79 | 4-80 | 4-81 | 4-82 | 4-83 | 4-84 |
| Formulation amount (parts by mass) | Amount of polymer composite | 230 | 230 | 230 | 230 | 230 | 230 | 230 | 230 | 230 | 230 | 230 | 230 |
| | Carbon black | 130 | 130 | 130 | 130 | 130 | 130 | 130 | 130 | 130 | 130 | 130 | 130 |
| | Oil | 50 | 50 | 50 | 50 | 50 | 50 | 50 | 50 | 50 | 50 | 50 | 50 |
| | Zinc oxide | 2 | 2 | 2 | 2 | 2 | 2 | 2 | 2 | 2 | 2 | 2 | 2 |
| | Wax | 1 | 1 | 1 | 1 | 1 | 1 | 1 | 1 | 1 | 1 | 1 | 1 |
| | Antioxidant 1 | 1 | 1 | 1 | 1 | 1 | 1 | 1 | 1 | 1 | 1 | 1 | 1 |
| | Antioxidant 2 | 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 | 1 |
| | Vulcanization accelerator 2 | 3 | 3 | 3 | 3 | 3 | 3 | 3 | 3 | 3 | 3 | 3 | 3 |
| | Sulfur | 0.6 | 0.6 | 0.6 | 0.6 | 0.6 | 0.6 | 0.6 | 0.6 | 0.6 | 0.6 | 0.6 | 0.6 |
| | Vulcanization accelerator 1 | 4 | 4 | 4 | 4 | 4 | 4 | 4 | 4 | 4 | 4 | 4 | 4 |
| Evaluation result | Processability | Excellent | Excellent | Excellent | Excellent | Excellent | Excellent | Excellent | Excellent | Excellent | Excellent | Excellent | Excellent |
| | Initial grip performance (i) | 142 | 142 | 143 | 143 | 143 | 144 | 144 | 144 | 144 | 145 | 145 | 145 |
| | Grip performance stability (ii) | 148 | 148 | 149 | 149 | 149 | 149 | 150 | 150 | 150 | 151 | 151 | 151 |
| | Abrasion resistance (iii) | 118 | 118 | 118 | 119 | 119 | 119 | 119 | 120 | 120 | 120 | 120 | 121 |
| | Total of (i) to (iii) | 408 | 408 | 410 | 411 | 411 | 412 | 413 | 414 | 414 | 416 | 416 | 417 |

Tables 1 to 8 demonstrate that good processability was imparted to the rubber compositions and, further, balanced improvements in initial grip performance, grip performance stability, and abrasion resistance were achieved

in the examples using polymer composites each of which was prepared by mixing a resinous organic compound having a weight average molecular weight of 250 or more and a polymer having a weight average molecular weight of 3,000 or more, synthesized by polymerizing a conjugated diene monomer that was a conjugated diene-containing monomer.

Comparisons between the results in Table 6-1 and Table 6-2 and between the results in Table 7 and Table 8 reveal that the effects of the present invention were more suitably achieved when the polymer and the resinous organic compound were mixed in solution (solution mixing) than when the polymer and the resinous organic compound were mechanically mixed in the solid state.

Comparisons between the results in Table 6-1 and Table 7 and between the results in Table 6-2 and Table 8 reveal that the effects of the present invention were more suitably achieved when the polymer composite contained the low molecular weight polymer together with the high molecular weight polymer.

## Claims

1. A pneumatic tire having a tread, wherein the tread is composed of a rubber composition including a polymer composite, obtained by mixing a resinous organic compound having a weight average molecular weight of 250 or more, a high molecular weight polymer and a low molecular weight polymer, the polymer being synthesized by polymerizing a conjugated diene monomer that is a conjugated diene-containing monomer, wherein the high molecular weight polymer has a weight average molecular weight of at least 50,000 and the low molecular weight polymer has a weight average molecular weight of 3,000 or more and less than 50,000.

2. The pneumatic tire according to claim 1,
wherein the conjugated diene monomer is at least one selected from the group consisting of butadiene, isoprene, and derivatives of butadiene or isoprene.

3. The pneumatic tire according to claim 1 or 2,
wherein the polymer is synthesized by polymerizing the conjugated diene monomer and an aromatic vinyl monomer.

4. The pneumatic tire according to claim 3,
wherein the aromatic vinyl monomer is at least one selected from the group consisting of styrene and derivatives of styrene.

5. The pneumatic tire according to any one of claims 1 to 4,
wherein the resinous organic compound is at least one selected from the group consisting of terpenic resins, aromatic resins, acrylic resins, and urethanic resins.

6. The pneumatic tire according to any one of claims 1 to 5,
wherein the polymer composite is obtained by mixing the polymer and the resinous organic compound in solid state or in solution.

7. The pneumatic tire according to any one of claims 1 to 6,
wherein at least one of the polymer or the resinous organic compound is hydrogenated.

8. A method for producing a pneumatic tire having a tread, wherein the tread is composed of a rubber composition including a polymer composite according to any one of claims 1 to 7,
the method comprising mixing the polymer and the resinous organic compound in solid state or in solution.

## Patentansprüche

1. Luftreifen mit einer Lauffläche, wobei die Lauffläche aus einer Kautschukzusammensetzung zusammengesetzt ist, die einen Polymerverbund umfasst, erhalten durch Mischen einer harzartigen organischen Verbindung mit einem gewichtsgemittelten Molekulargewicht von 250 oder mehr, eines Polymers mit hohem Molekulargewicht und eines Polymers mit niedrigem Molekulargewicht, wobei das Polymer durch Polymerisieren eines konjugierten Dienmonomers synthetisiert ist, das ein konjugiertes Dien enthaltendes Monomer ist, wobei das Polymer mit hohem Molekulargewicht ein gewichtsgemitteltes Molekulargewicht von mindestens 50 000 aufweist und das Polymer mit niedrigem Molekulargewicht ein gewichtsgemitteltes Molekulargewicht von 3 000 oder mehr und weniger als 50 000 aufweist.

2. Luftreifen nach Anspruch 1, wobei das konjugierte Dienmonomer mindestens eines ist, ausgewählt aus der Gruppe, bestehend aus Butadien, Isopren und Derivaten von Butadien oder Isopren.

3. Luftreifen nach Anspruch 1 oder 2, wobei das Polymer durch Polymerisieren des konjugierten Dienmonomers und eines aromatischen Vinylmonomers synthetisiert ist.

4. Luftreifen nach Anspruch 3, wobei das aromatische Vinylmonomer mindestens eines ist, ausgewählt aus der Gruppe, bestehend aus Styrol und Derivaten von Styrol.

5. Luftreifen nach einem der Ansprüche 1 bis 4, wobei die harzartige organische Verbindung mindestens eine ist, ausgewählt aus der Gruppe, bestehend aus Terpenharzen, Aromatenharzen, Acrylharzen und Urethanharzen.

6. Luftreifen nach einem der Ansprüche 1 bis 5, wobei der Polymerverbund durch Mischen des Polymers und der harzartigen organischen Verbindung im festen Zustand oder in Lösung erhalten ist.

7. Luftreifen nach einem der Ansprüche 1 bis 6, wobei mindestens eines von dem Polymer oder der harzartigen organischen Verbindung hydriert ist.

8. Verfahren zur Herstellung eines Luftreifens mit einer Lauffläche, wobei die Lauffläche aus einer Kautschukzusammensetzung zusammengesetzt ist, die einen Polymerverbund nach einem der Ansprüche 1 bis 7 umfasst, wobei das Verfahren ein Mischen des Polymers und der harzartigen organischen Verbindung im festen Zustand oder in Lösung umfasst.

## Revendications

1. Bandage pneumatique ayant une bande de roulement, dans lequel la bande de roulement est composée d'une composition en caoutchouc incluant un composite polymère, obtenu par mélange d'un composé organique résineux ayant un poids moléculaire moyen pondéral de 250 ou plus, d'un polymère de haut poids moléculaire et d'un polymère de faible poids moléculaire, le polymère étant synthétisé par polymérisation d'un monomère diénique conjugué qui est un monomère contenant un diène conjugué, dans lequel le polymère de haut poids moléculaire a un poids moléculaire moyen pondéral d'au moins 50 000 et le polymère de faible poids moléculaire a un poids moléculaire moyen pondéral de 3 000 ou plus et inférieur à 50 000.

2. Bandage pneumatique selon la revendication 1,
dans lequel le monomère diénique conjugué est au moins un élément sélectionné parmi le groupe constitué de butadiène, isoprène et dérivés de butadiène ou d'isoprène.

3. Bandage pneumatique selon la revendication 1 ou 2,
dans lequel le polymère est synthétisé par polymérisation du monomère diénique conjugué et d'un monomère vinylique aromatique.

4. Bandage pneumatique selon la revendication 3,
dans lequel le monomère vinylique aromatique est au moins un élément sélectionné parmi le groupe constitué de styrène et dérivés de styrène.

5. Bandage pneumatique selon l'une quelconque des revendications 1 à 4, dans lequel le composé organique résineux est au moins un élément sélectionné parmi le groupe constitué de résines terpéniques, résines aromatiques, résines acryliques et résines uréthaniques.

6. Bandage pneumatique selon l'une quelconque des revendications 1 à 5, dans lequel le composite polymère est obtenu par mélange du polymère et du composé organique résineux à l'état solide ou en solution.

7. Bandage pneumatique selon l'une quelconque des revendications 1 à 6, dans lequel au moins un élément parmi le polymère ou le composé organique résineux est hydrogéné.

8. Procédé de production d'un bandage pneumatique ayant une bande de roulement, dans lequel la bande de roulement est composée d'une composition en caoutchouc incluant un composite polymère selon l'une quelconque des revendications 1 à 7,
le procédé comprenant l'opération consistant à mélanger le polymère et le composé organique résineux à l'état solide ou en solution.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2774779 A1
- US 20110048599 A
- US 20100317800 A1
- US 20100179247 A1
- JP 2004137463 A
- JP S59161415 A
- US 4414370 A
- JP S596207 A
- JP H558005 B
- JP H1313522 A
- US 5010166 A


### Non-patent literature cited in the description


- TREND. Toagosei Co., Ltd, 2000, vol. 3, 42-45